# EUROPÄISCHE PATENTANMELDUNG

(11) **EP 4 851 920 A1**
(43) Veröffentlichungstag der Anmeldung: **09.12.2026**
(21) Anmeldenummer: 26182440.3
(22) Anmeldetag: 02.06.2026
(51) Int. Cl.: G06T 7/571

(54) **VERFAHREN ZUM ERMITTELN EINER TIEFENKARTE**

(30) Priorität: 02.06.2025 DE 102025121470
(71) Anmelder: Arnold & Richter Cine Technik GmbH & Co. Betriebs KG, 80807 München (DE)
(72) Erfinder: Niedermair, Ewald, 1120 Wien (AT); Ehrlich, Stefan, 1030 Wien (AT); Haubmann, Michael, 1230 Wien (AT)
(74) Vertreter: Manitz Finsterwald Patent- und Rechtsanwaltspartnerschaft mbB

(57) **Zusammenfassung**

Es wird ein Verfahren zum Ermitteln einer Tiefenkarte einer Szene vorgeschlagen, bei dem die Tiefenkarte der Szene aus einem Aufzeichnungsdatensatz ermittelt wird, der Bilddaten und einer Aufzeichnung der Bilddaten zugehörige Metadaten umfasst, wobei die Bilddaten die Bildinformation wenigstens eines mittels eines Kamerasystems aufgezeichneten Bildes der Szene repräsentieren und die Metadaten effektive Werte eines oder mehrerer einstellbarer und/oder messbarer Parameter des Kamerasystems beim Aufzeichnen des wenigstens einen Bildes umfassen. Das Verfahren umfasst, dass der Aufzeichnungsdatensatz durch ein ML-Verfahren (Verfahren des maschinellen Lernens) ausgewertet wird, das basierend zumindest auf den Bilddaten sowie den zugehörigen Metadaten eine Tiefenkarte der Szene erzeugt.

## Beschreibung

Die Erfindung betrifft ein Verfahren zum Ermitteln einer Tiefenkarte einer Szene.

Zum Aufzeichnen von Bildern einer Szene kann ein Kamerasystem verwendet werden, das zumindest eine Kamera mit einem Objektiv umfasst, aber auch weitere Komponenten umfassen kann. Bei der Kamera kann es sich um eine Stillbildkamera oder eine Bewegtbildkamera handeln. Typischerweise ist eine Kamera heutzutage als elektronische Kamera ausgebildet und umfasst einen Bildsensor, der durch das Objektiv der Kamera in die Kamera eindringendes und letztlich auf den Bildsensor auftreffendes Licht in elektrische Signale umwandelt. Dazu kann der Bildsensor eine Vielzahl von in Zeilen und Spalten angeordneten Pixeln aufweisen, die jeweils ein lichtempfindliches Detektorelement umfassen, das entsprechend der Intensität des auf das jeweilige Pixel auftreffenden Lichts elektrische Ladung erzeugt, die in ein elektrisches Signal umgewandelt werden kann.

Das Objektiv dient dabei dazu, die Szene auf den Bildsensor abzubilden. Dabei werden Teile der Szene, die in einer Schärfeebene liegen (d. h. dass sie einen Abstand zum Objektiv aufweisen, der einem eingestellten Fokusabstand des Objektivs entspricht), scharf abgebildet, wohingegen Teile der Szene, die näher oder weiter weg sind, mit zunehmendem Abstand von der Schärfeebene immer weniger scharf abgebildet werden. Innerhalb eines gewissen Abstandsbereichs beidseitig der Schärfeebene, der als Schärfentiefe bezeichnet wird und dessen Ausdehnung insbesondere von einem eingestellten Blendenwert des Objektivs abhängt, wird die Abbildung dabei noch als hinreichend scharf wahrgenommen.

Bei Objektiven, bei denen sich der Fokusabstand (und der Blendenwert) verstellen lässt, kann somit gezielt auf bestimmte Bereiche der Szene scharfgestellt werden. Das Verstellen kann dabei manuell - etwa mittels eines Stellrings direkt am Objektiv oder durch Betätigen einer Verstellvorrichtung, über die ein Antrieb zum Verstellen des Objektivs gesteuert werden kann - oder automatisch erfolgen - etwa mittels eines Autofokussystems, das in die Kamera integriert sein kann und dazu ausgebildet ist, einen zur Verwirklichung eines bestimmten Fokusziels geeigneten Fokusabstand zu ermitteln und den genannten Antrieb zum Verstellen des Objektivs auf diesen Fokusabstand anzusteuern.

Speziell im Kontext professioneller Fotografie sowie professioneller Filmproduktionen wird die Möglichkeit, nur bestimmte Teile einer Szene scharf abzubilden und sie dadurch gegenüber anderen Teilen herauszustellen, als Mittel der künstlerischen Gestaltung genutzt. Aus diesem Grund wird es in diesen Kontexten in der Regel nicht einem Autofokus überlassen, den Fokusabstand zu verstellen. Vielmehr wird der Fokusabstand manuell vom jeweiligen Kameramann oder einem Kameraassistenten (der daher auch als Focus Puller bezeichnet wird) verstellt.

Dabei ist ein präzises manuelles Fokussieren derart, dass jeweils genau die gewünschten Objekte oder Bereiche der Szene scharf abgebildet werden, essentiell, um die angestrebte Bildwirkung zu erzielen. Insbesondere bei dynamischen Szenen, bei denen sich die Kamera und/oder das Motiv bewegt/bewegen, ist das manuelle Fokussieren eine herausfordernde Aufgabe. Dabei wird das Fokussieren durch die immer größere Auflösung von Bildsensoren sowie durch den Einsatz immer leistungsfähigerer Objektive mit weit geöffneter Blende noch zunehmend schwieriger. Eine ungenaue Fokussierung kann zu unscharfen oder unbrauchbaren Aufnahmen führen, was in der professionellen Filmproduktion erhebliche Kosten verursachen kann.

Daher wird nach Möglichkeiten gesucht, das manuellen Fokussieren zwar nicht durch ein präziseres automatisches Fokussieren abzulösen, aber durch ein Fokus-Assistenz-System, das automatisch Information über den Fokus bereitstellt, zu unterstützen.

Dazu können interne Hilfsmittel vorgesehen sein. Beispielsweise kann der Bildsensor spezielle Pixel (sogenannte PDAF- oder Fokuspixel) aufweisen, mit denen sich eine Phasendifferenz messen und anhand dessen feststellen lässt, ob im Bereich dieses Pixels scharf abgebildet wird. Derartige interne Lösungen können aber die Bildqualität des Sensors reduzieren, sind abhängig vom Objektivdesign und decken in der Regel nicht den gesamten Bildbereich ab.

Tiefenkarten, die die Tiefeninformation einer Szene erfassen, können eine wertvolle Unterstützung für das manuelle Fokussieren bieten. Eine Tiefenkarte (Depth Map) kann, zumindest näherungsweise, für jeden Bildpunkt eines Bildes einer Szene Information darüber umfassen, welchen Abstand der auf den jeweiligen Bildpunkt abgebildete Teil der Szene zur Kamera aufweist. Diese Information kann dann genutzt werden, um dem für das Fokussieren zuständigen Nutzer des Kamerasystems visuelles oder haptisches Feedback zu geben, das das Einstellen des korrekten Fokusabstands erleichtert. Dadurch kann die Präzision beim Fokussieren verbessert und der kreative Spielraum für Kamerabewegungen und Fokusverlagerungen erweitert werden. Die erzeugte Tiefenkarte kann außerdem als Hilfsmittel für eine nachträgliche Bearbeitung der Bilddaten verwendet werden. Insofern bietet eine Tiefenkarte zusätzliche Vorteile gegenüber internen Hilfsmitteln, die lediglich feststellen, welche Bildpunkte fokussiert sind.

Tiefenkarten sind jedoch nicht nur zur Unterstützung eines manuellen Fokussierens während einer Aufzeichnung vorteilhaft, sondern können auch für die Nachbearbeitung aufgezeichneter Bilddaten nützlich sein. Denn anhand der zusätzlichen Tiefeninformation können sich Objekte der aufgezeichneten Szene oftmals besser voneinander unterscheiden lassen als ausschließlich anhand der Bildinformation, da sich verschiedene Objekte in der Regel eindeutiger hinsichtlich ihrer Position im Raum voneinander unterscheiden als hinsichtlich ihrer bildlichen Repräsentation in einem aufgezeichneten Bild. Tiefenkarten können insbesondere das präzise Freistellen eines jeweiligen Objekts für das sogenannte Compositing im Rahmen der Nachbearbeitung der Bilddaten wesentlich vereinfachen und zuverlässiger machen. Das jeweilige Objekt kann dabei anhand seiner Lage in der Szene - und zwar nicht anhand nur seiner Position im zweidimensionalen Bild, sondern auch anhand seiner Tiefe, d. h. seinem Abstand von der Kamera des Kamerasystems bzw. von dessen Objektiv, und somit besonders präzise - aus dem Bild sozusagen ausgestanzt werden, beispielsweise um es in dem aufgezeichneten Bild durch andere (aufgezeichnete oder künstlich generierte) Bilddaten zu ersetzen, es innerhalb des aufgezeichneten Bildes mit solchen anderen Bilddaten zu kombinieren oder es in ein anderes (aufgezeichnetes oder künstlich generiertes) Bild einzufügen.

Für das Ermitteln von Tiefenkarten werden typischerweise externe Hilfsmittel verwendet, mit denen die Abstände konkret gemessen werden. Beispielsweise können Abstandssensoren genutzt werden, die in der Nähe der Kamera angeordnet werden und die Szene abtasten. Solche Abstandssensoren können etwa als Timeof-Flight-Sensoren ausgebildet sein. Durch das Vorsehen externer Sensoren erhöht sich jedoch die Komplexität des Kamerasystems. Zudem haben die Sensoren meist nur eine limitierte Reichweite und ihre räumliche Auflösung ist in der Regel wesentlich geringer als die des Bildsensors. Außerdem muss für die erforderliche Zuordnung der gemessenen Abstandsinformation zu den Bilddaten die Anordnung der Sensoren relativ zur Kamera sehr präzise eingestellt und kalibriert werden, so dass Verfahren, die auf externen Hilfsmitteln beruhen, vergleichsweise aufwendig einzurichten sind.

Es ist eine Aufgabe der Erfindung, ein Möglichkeit zum Ermitteln einer Tiefenkarte einer Szene bereitzustellen (insbesondere um anhand der Tiefenkarte ein manuelles Fokussieren eines für ein Aufzeichnen der Szene genutzten Kamerasystems zu unterstützen und/oder eine Nachbearbeitung aufgezeichneter Bilddaten zu vereinfachen und zuverlässiger zu machen), die keine speziellen Bildsensoren und/oder Objektive sowie keine spezielle Sensorik erfordert und für einen Nutzer vergleichsweise wenig aufwendig ist.

Die Aufgabe wird gelöst durch ein Verfahren zum Ermitteln einer Tiefenkarte einer Szene mit den Merkmalen des Anspruchs 1, durch ein Verfahren zum Unterstützen eines manuellen Fokussierens eines Kamerasystems und/oder zum Unterstützen einer Nachbearbeitung von mittels eines Kamerasystems aufgezeichneten Bildern mit den Merkmalen des Anspruchs 13, durch ein Computerprogrammprodukt mit den Merkmalen des Anspruchs 14 sowie durch ein Kamerasystem mit den Merkmalen des Anspruchs 15. Vorteilhafte Weiterbildungen der Erfindung ergeben sich aus den Unteransprüchen, der vorliegenden Beschreibung sowie den Figuren.

Bei dem erfindungsgemäßen Verfahren zum Ermitteln einer Tiefenkarte einer Szene wird die Tiefenkarte aus einem Aufzeichnungsdatensatz ermittelt, der Bilddaten und einer Aufzeichnung der Bilddaten zugehörige Metadaten umfasst, wobei die Bilddaten die Bildinformation wenigstens eines mittels eines Kamerasystems aufgezeichneten Bildes der Szene repräsentieren und die Metadaten effektive Werte eines oder mehrerer einstellbarer und/oder messbarer Parameter des Kamerasystems beim Aufzeichnen des wenigstens einen Bildes umfassen.

Das Kamerasystem kann insbesondere zumindest eine Kamera mit einem Bildsensor und einem Objektiv umfassen, das die Szene als Bild auf den Bildsensor abbildet, so dass für das Aufzeichnen des Bildes der Szene mittels der Kamera die genannten Bilddaten erzeugt werden können, die die Bildinformation des Bildes der Szene repräsentieren. Bei dem Aufzeichnen weist das Kamerasystem gewisse Parameter auf. Dabei kann es sich um einstellbare Parameter wie etwa einen eingestellten Fokusabstand des Objektivs oder einen eingestellten Blendenwert des Objektivs handeln. Es kann sich aber auch um Parameter handeln, die nicht unbedingt gezielt verstellt werden, wie etwa optische Charakteristika des Objektivs und/oder die Anzahl und/oder Anordnung der Pixel des Bildsensors der Kamera; dabei können solche Parameter gleichwohl veränderlich sein, wie etwa eine Temperatur des Kamerasystems, die sich auf ein Rauschen des Bildsensors auswirken kann. Als Parameter kommen ferner die räumliche Lage und/oder eine Bewegung der Kamera bzw. des Kamerasystems bei der Aufzeichnung in Betracht.

Der jeweilige Parameter kann zum Beispiel dadurch erfasst werden, dass er bekannt ist, etwa weil er vorgegeben ist oder eingestellt wird, oder dadurch, dass er gemessen wird. Dabei können auch vorgegebene oder eingestellte Parameter noch zusätzlich gemessen werden, um sicherzustellen, dass der effektive Wert eines Parameters vom vorgegebenen oder eingestellten Wert nicht abweicht.

Die effektiven Werte eines oder mehrerer solcher Parameter, die das Kamerasystem beim Aufzeichnen der Bilddaten aufgewiesen hat, können als Metadaten gespeichert und dadurch den Bilddaten zugeordnet werden. Insofern handelt es sich bei den Metadaten um der Aufzeichnung der Bilddaten zugehörige Metadaten. Relevant sind dabei insbesondere solche Parameter, die sich konkret auf die aufgezeichneten Bilddaten, insbesondere auf die Schärfe der Abbildung der Szene, auswirken.

Gemeinsam können die Bilddaten und die der Aufzeichnung der Bilddaten zugehörigen Metadaten den genannten Aufzeichnungssatz bilden. Der Aufzeichnungsdatensatz kann grundsätzlich noch weitere Daten umfassen, was für das Verfahren jedoch nicht unbedingt erforderlich ist.

Erfindungsgemäß umfasst das Verfahren, dass der Aufzeichnungsdatensatz durch ein ML-Verfahren, d. h. durch ein Verfahren des maschinellen Lernens, ausgewertet wird, das basierend auf den Bilddaten sowie den zugehörigen Metadaten eine Tiefenkarte der Szene erzeugt. Die Tiefenkarte kann insbesondere das Ergebnis des Auswertens sein. Dass das ML-Verfahren die Tiefenkarte basierend auf den Bilddaten sowie den zugehörigen Metadaten erzeugt, meint insbesondere, dass die Bilddaten und die Metadaten Eingangswerte für die ML-Verfahren bilden. Das ML-Verfahren kann dabei noch zusätzlich auf weiteren Daten basieren, es gehen aber zumindest die Bilddaten sowie die zugehörigen Metadaten als Eingangswerte in das ML-Verfahren ein.

Dass die Bilddaten und die zugehörigen Metadaten Eingangswerte des ML-Verfahrens bilden, meint insbesondere, dass sie im Rahmen des ML-Verfahrens Berücksichtigung finden, insbesondere verrechnet werden, und dadurch in das Ergebnis der Auswertung des Aufzeichnungsdatensatzes durch das ML-Verfahren, nämlich in die erzeugte Tiefenkarte, einfließen. Die Tiefenkarte hängt folglich sowohl von den Bilddaten als auch von den zugehörigen Metadaten ab. Dabei müssen nicht zwingend alle in den Bilddaten enthaltenen Daten und nicht zwingend alle in den Metadaten enthaltenen Daten durch das ML-Verfahren konkret berücksichtigt werden. Erfindungsgemäß werden aber nicht ausschließlich die Bilddaten und nicht ausschließlich die Metadaten berücksichtigt, sondern das Erzeugen der Tiefenkarte basiert sowohl auf den Bilddaten als auch auf den Metadaten. Vorzugsweise werden die Bilddaten dabei vollständig berücksichtigt und vorzugsweise werden dabei zumindest die von den Metadaten umfassten effektiven Werte derjenigen Parameter berücksichtig, die sich auf die Schärfe der Abbildung der Szene auswirken.

Grundsätzlich erscheint es denkbar, dass ein ML-Verfahren ausschließlich basierend auf Bilddaten einer Szene eine Tiefenkarte dieser Szene erzeugt. Ein solches Verfahren wäre aber unnötig aufwendig, da es (gegebenenfalls ohnehin vorhandene) ergänzende Information unberücksichtigt lassen würde. Aus demselben Grund ist zu erwarten, dass ein solches Verfahren weniger zuverlässige Ergebnisse liefern würde als das erfindungsgemäße Verfahren. Das erfindungsgemäße Verfahren kann dagegen mit weniger Rechenaufwand zuverlässigere Ergebnisse liefern, was insbesondere für eine Anwendung in Echtzeit während einer Aufzeichnung von Bilddaten wichtig ist.

Dadurch, dass das Ermitteln der Tiefenkarte durch ein ML-Verfahren erfolgt und auf den Bilddaten sowie den zugehörigen Metadaten beruht, braucht das Kamerasystem keine speziellen Sensoren für das Messen von Abständen zu umfassen und auch keine Kamera aufzuweisen, deren Hardware (z. B. Bildsensor mit Fokuspixeln) speziell dazu ausgebildet ist, fokussierte Bereiche zu detektieren. Dadurch kann das Kamerasystem eine vergleichsweise geringe Komplexität aufweisen. Die reduzierte Anzahl von Komponenten kann zu einer Kostenersparnis führen; zudem kann das Kamerasystem vergleichsweise kompakt ausgebildet sein. Ferner ist denkbar, dass die durch das erfindungsgemäße Verfahren bereitgestellte Funktionalität auch in bestehenden Kamerasystemen, z. B. durch ein Softwareupdate, nachgerüstet werden kann. Dass das Verfahren von externen Hilfsmitteln zur Messung von Abständen unabhängig ist, vereinfacht zudem die Verwendung des Kamerasystems, da aufwendige Kalibrierungen entfallen.

Für die Ausführung des erfindungsgemäßen Verfahrens kommen zahlreiche verschiedene ML-Verfahren grundsätzlich in Betracht. Welches konkrete ML-Verfahren verwendet wird, ist daher für den allgemeinen Erfindungsgedanken, eine Tiefenkarte basierend sowohl auf den Bilddaten als auch auf den zugehörigen Metadaten zu ermitteln, nicht unbedingt entscheidend. Gleichwohl können bestimmte ML-Verfahren spezielle Vorteile bieten und sich daher in besonderer Weise für das erfindungsgemäße Verfahren eignen.

ML-Verfahren, die in dem erfindungsgemäßen Verfahren dazu verwendet werden können, einen Aufzeichnungsdatensatz auszuwerten, in die also sowohl die Bilddaten als auch die zugehörigen Metadaten als Eingangswerte eingehen, und die basierend zumindest auf den Bilddaten sowie den zugehörigen Metadaten als Ergebnis der Auswertung eine Tiefenkarte erzeugen, können beispielsweise Entscheidungsbaum-Algorithmen, Random-Forest-Algorithmen, Support-Vector-Maschine-Algorithmen (SVM-Algorithmen) k-Nearest-Neighbor-Algorithmen und/oder ein oder mehrere neuronale Netze umfassen. Speziell geeignet können ferner künstliche neuronale Netze, insbesondere Convolutional Neural Networks (CNN), sein; grundsätzlich kommen auch Fully Connected Networks in Betracht.

Ein künstliches neuronales Netz, das vom dem verwendeten ML-Verfahren umfasst sein kann, kann eine Eingabeschicht umfassen, in die die Bilddaten und die zugehörigen Metadaten eingegeben werden. Auf die Eingabeschicht können mehrere verborgene Schichten (Hidden Layers) folgen, die jeweils eine Ausgabe produzieren, sowie letztlich eine Ausgabeschicht, die das Ergebnis ausgibt. Die Eingabeschicht kann beispielsweise genauso viele Neuronen umfassen wie Eingabewerte vorhanden sind, insbesondere für jeden Bildpunkt der Bilddaten und jeden (berücksichtigten) Parameter der Metadaten ein Neuron. Die Ausgabeschicht kann beispielsweise für jeden Bildpunkt der Tiefenkarte ein Neuron umfassen. Dabei kann die Tiefenkarte dieselbe Auflösung wie die Bilddaten oder auch eine andere, insbesondere geringere, Auflösung aufweisen.

Das ML-Verfahren kann auf einem Modell, wie etwa dem genannten künstlichen neuronalen Netz, beruhen, das speziell im Hinblick auf das Erzeugen einer Tiefenkarte trainiert worden ist. Das Trainieren des Modells (das auch als Trainieren des ML-Verfahrens betrachtet werden kann) kann auch Teil des erfindungsgemäßen Verfahrens sein. Das Trainieren kann insbesondere umfassen, dass, beispielsweise in den Neuronen eines künstlichen neuronalen Netzes, Gewichte geändert werden. Beispielsweise kann das Trainieren durch Backpropagation und/oder als Reinforcement Training erfolgen.

Es kann vorgesehen sein, dass das ML-Verfahren auf einer Recheneinheit des Kamerasystems ausgeführt wird. Vorzugsweise umfasst die Recheneinheit dazu eine GPU- und/oder TPU-basierte Hardware (Graphics Processing Unit bzw. Tensor Processing Unit). Für das Ausführen des ML-Verfahrens können insbesondere Frameworks wie PyTorch und/oder TensorFlow verwendet werden.

Gemäß einer vorteilhaften Ausführungsform ist vorgesehen, dass das ML-Verfahren eine Korrelation zwischen den Bilddaten und den zugehörigen Metadaten bestimmt und die Tiefenkarte (zumindest unter anderem) basierend auf dieser Korrelation erzeugt.

Ein Beispiel für eine solche Korrelation ist etwa der Zusammenhang zwischen einerseits den in den Metadaten gegebenenfalls enthaltenen Werten des beim Aufzeichnen eingestellten Fokusabstands, des beim Aufzeichnen eingestellten Blendenwerts und/oder der beim Aufzeichnen eingestellten Brennweite (Zoom) eines Objektivs einer Kamera des Kamerasystems und andererseits der daraus resultierenden Schärfentiefe des aufgezeichneten Bildes, dessen Bildinformation die Bilddaten repräsentieren. Das Berücksichtigen solcher Korrelationen kann die Zuverlässigkeit des Erzeugens der Tiefenkarte erhöhen.

Alternativ oder zusätzlich dazu ist gemäß einer weiteren vorteilhaften Ausführungsform vorgesehen, dass das ML-Verfahren aus den Bilddaten und den zugehörigen Metadaten eine Entfernung bestimmt, in der sich beim Aufzeichnen des wenigstens einen Bildes ein durch die Bilddaten repräsentiertes Objekt (der Szene) zu dem Kamerasystem befunden hat, und die Tiefenkarte (zumindest unter anderem) basierend auf dieser Entfernung erzeugt. Dabei wird zumindest eine Entfernung zumindest eines Objekts bestimmt. Vorzugsweise werden für mehrere Objekte, insbesondere für mehrere Teilbereiche eines jeweiligen Objekts, jeweils eine Entfernung bestimmt, wobei die Tiefenkarte dann basierend auf den so bestimmten Entfernungen erzeugt wird.

Das ML-Verfahren kann die genannte Korrelation und/oder die genannte Entfernung insbesondere insofern bestimmen, als es diese als Zwischenergebnis ermittelt, das dann in die Erzeugung der Tiefenkarte eingeht. Das ML-Verfahren kann beispielsweise zwei oder mehr Teilverfahren umfassen, bei denen es sich jeweils um ein Verfahren maschinellen Lernens handeln kann. Die Teilverfahren können dabei jeweils grundsätzlich eigenständig sein. Insbesondere können die Teilverfahren nach verschiedenen Prinzipien des maschinellen Lernens ausgebildet sein. Es kann vorgesehen sein, dass eines der Teilverfahren basierend auf den Bilddaten und den zugehörigen Metadaten die genannte Korrelation bzw. die genannte Entfernung ermittelt, wobei diese dann in ein anderes Teilverfahren eingeht (als einer der Eingangswerte dieses anderen Teilverfahrens), das dann (zumindest unter anderem) basierend auf der Korrelation bzw. der Entfernung die Tiefenkarte erzeugt.

Gemäß einer weiteren vorteilhaften Ausführungsform enthalten die zugehörigen Metadaten keine Sensordaten einer Entfernungsmessung. Das Ermitteln der Tiefenkarte erfolgt also, ohne dass Entfernungen direkt (gemäß einem physikalischen Messprinzip) gemessen werden müssten. Zwar werden dem Erzeugen der Tiefenkarte nicht ausschließlich die aufgezeichneten Bilddaten, sondern erfindungsgemäß auch die zugehörigen Metadaten zugrunde gelegt; diese enthalten jedoch keine gemessenen Entfernungen von Objekten oder Bereichen der aufgezeichneten Szene, sondern tragen andere, indirektere Hinweise auf solche Entfernungen zur Erzeugung der Tiefenkarte bei. Der Vorteil derartiger Metadaten im Vergleich zu Sensordaten einer Entfernungsmessung ist dabei, dass sie keine zusätzliche Hardware voraussetzen und in der Regel nicht eigens erfasst werden müssen, sondern idealerweise ohnehin vorliegen.

Gemäß einer weiteren vorteilhaften Ausführungsform erzeugt das ML-Verfahren die Tiefenkarte basierend auf einer Ortsfrequenzverteilung der Bilddaten. Die Ortsfrequenzverteilung kann ein Eingangswert des ML-Verfahrens sein. Die Bilddaten können dann zusätzlich, als weitere Eingangswerte, oder aber in Form der Ortsfrequenzverteilung in das ML-Verfahren eingehen (außerdem gehen erfindungsgemäß die zugehörigen Metadaten in das ML-Verfahren ein). Alternativ dazu, dass die Ortsfrequenzverteilung als Eingangswert in das ML-Verfahren eingeht, kann ähnlich wie bei der vorstehend genannten Korrelation bzw. der vorstehend genannten Entfernung vorgesehen sein, dass das ML-Verfahren selbst (insbesondere ein Teilverfahren des ML-Verfahrens) die Ortsfrequenzverteilung bestimmt und anschließend die Tiefenkarte (unter anderem) basierend auf der Ortsfrequenzverteilung erzeugt.

Durch eine Ortsfrequenzverteilung kann angegeben werden, wie sehr sich ein jeweiliger Bildpunkt von benachbarten Bildpunkten hinsichtlich der jeweiligen Intensität (Gesamthelligkeit oder auf einen bestimmten Farbkanal bezogen) unterscheidet. Ändert sich die Intensität sprunghaft, wie es nur in scharf abgebildeten Bildbereichen der Fall sein kann, weist der Verlauf der Intensität lokal starke Anteile in hohen Frequenzbereichen auf. Daher kann die Ortsfrequenzverteilung als Maß für die lokale Schärfe des Bildes verwendet werden. Die Ortsfrequenzverteilung ist mit den Bilddaten vorzugsweise räumlich korreliert, so dass sie einzelnen Bildpunkte der Bilddaten zugeordnet werden kann. Idealerweise enthält sie für jeden der Bildpunkte eine jeweilige Information über lokal vorliegende Frequenzen; es kann aber auch reichen, wenn sie eine geringere Auflösung als die Bilddaten aufweist und z. B. nur für, vorzugsweise regelmäßig verteilt angeordnete, Bildpunkte einer bestimmten Untermenge aller Bildpunkte eine jeweilige Information über die lokal vorliegenden Frequenzen enthält.

Gemäß einer weiteren vorteilhaften Ausführungsform wird, vor dem Auswerten des Aufzeichnungsdatensatzes durch das ML-Verfahren, eine zweidimensionale Frequenzanalyse der Bilddaten durchgeführt, um eine Ortsfrequenzverteilung der Bilddaten zu ermitteln, wobei das Erzeugen der Tiefenkarte der Szene durch das ML-Verfahren zusätzlich auf der ermitteln Ortsfrequenzverteilung basiert. Gemäß dieser Ausführungsform wird die Ortsfrequenzverteilung, bei der es sich insbesondere um eine Ortsfrequenzverteilung der vorstehend beschriebenen Art handeln kann, also nicht durch das ML-Verfahren bestimmt, sondern ist das Ergebnis einer zuvor auf die Bilddaten angewendeten Frequenzanalyse und geht dann (als weiterer Eingangswert) in das ML-Verfahren ein. Insofern kann der Aufzeichnungsdatensatz, der durch das ML-Verfahren ausgewertet wird, zusätzlich zu den Bilddaten und den zugehörigen Metadaten die ermittelte Ortsfrequenzverteilung umfassen.

Gemäß einer weiteren vorteilhaften Ausführungsform wird, vor dem Auswerten des Aufzeichnungsdatensatzes durch das ML-Verfahren, eine Strukturerkennung auf die Bilddaten angewendet, um in der von den Bilddaten repräsentierten Bildinformation enthaltene Objektstrukturen zu ermitteln, die räumlich mit den Bilddaten korreliert sind, wobei das Erzeugen der Tiefenkarte der Szene durch das ML-Verfahren zusätzlich auf den ermittelten Objektstrukturen basiert. Die Strukturerkennung ist, mit anderen Worten, dazu ausgebildet, in der von den Bilddaten repräsentierten Bildinformation enthaltene Objektstrukturen zu ermitteln; und die durch das Anwenden der Strukturerkennung ermittelten Objektstrukturen gehen dann (als weitere Eingangswerte) in das ML-Verfahren ein. Die ermittelten Objektstrukturen können jeweils einem vollständigen Objekt (z. B. einen Menschen, einem Fahrzeug usw.) oder auch nur einem Teil eines Objekts (z. B. dem Gesicht eines Menschen, den Augen eines Menschen, der Frontscheibe eines Fahrzeugs usw.) entsprechen. Insofern kann der Aufzeichnungsdatensatz, der durch das ML-Verfahren ausgewertet wird, zusätzlich zu den Bilddaten und den zugehörigen Metadaten die ermittelten Objektstrukturen umfassen.

Für die Strukturerkennung können dabei verschiedene, grundsätzlich für sich bekannte, Verfahren (z. B. Verfahren zur Gesichtserkennung) verwendet werden. Als Ergebnis liefert die Strukturerkennung ermittelte Objektstrukturen, die insbesondere insofern mit den Bilddaten räumlich korreliert sein können, als sie sich dem jeweiligen Bildbereich zuordnen lassen, der der ermittelten Objektstruktur zugrunde liegt. Dadurch können die ermittelten Objektstrukturen als zusätzliche Information in das ML-Verfahren eingehen, beim Erzeugen der Tiefenkarte berücksichtigt werden und dadurch die Genauigkeit der Tiefenkarte verbessern. Beispielsweise kann die Strukturerkennung dazu ausgebildet sein, als Objektstruktur Gesichter zu erkennen; die in den ermittelten Objektstrukturen enthaltene Information kann dann von dem ML-Verfahren so berücksichtigen, dass die Tiefenkarte im Bereich eines jeweiligen Gesichts einen Tiefenverlauf aufweist, wie er für ein Gesicht realistischerweise möglich erscheint.

Die ermittelten Objektstrukturen können dabei nicht nur zum Erzeugen der Tiefenkarte beitragen, sondern auch zu einem durch die Tiefenkarte unterstützten Fokussieren. Insbesondere kann vorgesehen sein, dass der am Objektiv eingestellte Fokusabstand zunächst manuell so verstellt wird, dass ein gewünschtes Objekt der Szene, für das eine ermittelte Objektstruktur vorliegt, zumindest annährend scharf abgebildet wird, und dass der Fokusabstand anschließend automatisch anhand der ermittelten Objektstruktur des genannten Objekts so feinjustiert wird, dass er einen bestimmten Bereich der Objektstruktur scharf abbildet. Bei dem bestimmten Bereich kann es sich insbesondere um einen Bereich handeln, der für Objekte einer bestimmten Art typischerweise scharf abgebildet werden soll. Bezieht sich die Objektstruktur beispielsweise auf das (durch die Strukturerkennung als solches erkannte) Gesicht eines Menschen, sollen typischerweise dessen Augen möglichst scharf abgebildet werden. Der Fokusabstand kann dann manuell zumindest grob so verstellt werden, dass ein Objekt (nämlich das Gesicht) annähernd fokussiert ist, woraufhin das manuelle Fokussieren dadurch unterstützt wird: dass anhand der ermittelten Objektstruktur festgestellt wird, dass auf ein Objekt einer bestimmten Art (nämlich ein Gesicht) fokussiert worden ist; dass die Position eines bestimmten Bereichs des Objekts, der für Objekte dieser Art scharf abgebildet werden soll, (nämlich Position der Augen des Gesichts) bestimmt wird; dass anhand dieser Position aus der Tiefenkarte der Abstand des bestimmten Bereichs (nämlich der Augen) zur Kamera ausgelesen wird; und dass der Fokusabstand des Objektivs automatisch präzise auf diesen Abstand verstellt wird.

Die Bilddaten, die als Teil des Aufzeichnungsdatensatzes durch das ML-Verfahren ausgewertet werden, können die Bildinformation nicht nur eines, sondern mehrerer mittels des Kamerasystems aufgezeichneter Bilder der Szene repräsentieren. Grundsätzlich kann es sich bei diesen Bildern um Stereobilder handeln, also um ein oder mehrere Paare aus jeweils zwei Bildern der Szene, die mittels einer Kamera mit geteilter Optik oder mittels zweier Kameras des Kamerasystems aus (geringfügig) verschiedenen Blickwinkeln aufgezeichnet worden sind. Vorzugsweise handelt es sich bei den mehreren Bildern jedoch nicht um Stereobilder, sondern um monokulare Bilder, also Bilder, die mittels derselben Kamera des Kamerasystems jeweils aus dem Blickwinkel dieser einen Kamera aufgezeichnet worden sind. Beispielsweise können die mehreren Bilder in regelmäßigem zeitlichem Abstand (gemäß einer eingestellten Bildrate) nacheinander aufgezeichnet worden sein.

Gemäß einer weiteren vorteilhaften Ausführungsform repräsentieren die Bilddaten die Bildinformation mehrerer mittels des Kamerasystems nacheinander aufgezeichneter Bilder einer Bewegtbildszene. Bei der Kamera des Kamerasystems handelt es sich in diesem Fall zweckmäßigerweise um eine Bewegtbildkamera, die Bewegtbilder, nämlich eine Abfolge aus den genannten nacheinander aufgezeichneten Bildern, aufzeichnen kann. Grundsätzlich kommt das Verfahren allerdings auch für Stillbildkameras in Betracht. Sofern Bewegtbilder aufgezeichnet werden, ist es vorteilhaft, wenn das Verfahren fortlaufend, idealerweise in Echtzeit mit geringem zeitlichem Versatz, eine Tiefenkarte erzeugt, so dass die Tiefenkarte selber dynamisch ist und einem Bewegbild entspricht. Grundsätzlich kann dabei für jedes Einzelbild eine Tiefenkarte ermittelt werden, deren Erzeugung nur auf den Bilddaten dieses jeweiligen Einzelbildes sowie den zugehörigen Metadaten basiert. Vorzugsweise wird jedoch für das Erzeugen der Tiefenkarte auch Information aus zeitlichen Veränderungen im Bild genutzt, indem die Erzeugung der Tiefenkarte jeweils auf Bilddaten von mehreren nacheinander aufgezeichneten Bildern sowie den zugehörigen Metadaten basiert.

Gemäß einer vorteilhaften Weiterbildung der vorstehenden Ausführungsform bestimmt das ML-Verfahren aus Unterschieden zwischen den mehreren nacheinander aufgezeichneten Bildern der Bewegtbildszene eine Korrelation und erzeugt die Tiefenkarte (zumindest unter anderem) basierend auf dieser Korrelation. Da die Korrelation aus Unterschieden zwischen den mehreren nacheinander aufgezeichneten Bildern der Bewegtbildszene bestimmt wird, können durch die Korrelation insbesondere Bewegungen erkannt und für das Erzeugen der Tiefenkarte berücksichtigt werden können. Durch Korrelation kann beispielsweise festgestellt (und für das Ermitteln der Tiefenkarte berücksichtigt) werden, ob in mehreren nacheinander aufgezeichneten Bildern einzelne Objekte ihre Position im Bild verändert (d. h. das jeweilige Objekt hat sich bewegt) oder ob alle Objekte ihre Position im Bild auf ähnliche verändern (d. h. die Kamera wurde geschwenkt).

Das ML-Verfahren kann die genannte Korrelation insbesondere insofern bestimmen, als es diese als Zwischenergebnis ermittelt, das dann in die Erzeugung der Tiefenkarte eingeht. Das ML-Verfahren kann beispielsweise zwei oder mehr Teilverfahren umfassen, bei denen es sich jeweils um ein Verfahren maschinellen Lernens handeln kann. Die Teilverfahren können dabei jeweils grundsätzlich eigenständig sein. Insbesondere können die Teilverfahren nach verschiedenen Prinzipien des maschinellen Lernens ausgebildet sein. Es kann vorgesehen sein, dass eines der Teilverfahren basierend auf den Bilddaten und den zugehörigen Metadaten die genannte Korrelation ermittelt und diese dann in ein anderes Teilverfahren eingeht (als einer der Eingangswerte dieses anderen Teilverfahrens), das dann (zumindest unter anderem) basierend auf der Korrelation die Tiefenkarte erzeugt.

Gemäß einer weiteren vorteilhaften Ausführungsform wird die Tiefenkarte gemäß einem zweidimensionalen Raster erzeugt, das eine geringere räumliche Auflösung aufweist als die Bilddaten des wenigstens einen Bildes. Da selten auf die Ränder eines Objekts fokussiert wird, an denen die Tiefenkarte die stärksten Sprünge aufweist, braucht die Tiefenkarte für das Unterstützen eines präzisen Fokussierens nicht unbedingt eine maximale Auflösung (d. h. dieselbe räumliche Auflösung wie die Bilddaten selbst) aufzuweisen. Daher kann die Tiefenkarte mit einer demgegenüber (zumindest bis zu einem gewissen Grad) reduzierten Auflösung erzeugt werden, wodurch sich vorteilhafterweise die Komplexität des ML-Verfahrens und somit allgemein der Rechenaufwand verringern lassen.

Gemäß einer weiteren vorteilhaften Ausführungsform ist vorgesehen, dass das erfindungsgemäß Verfahren in dem Kamerasystem durchgeführt wird und die erzeugte Tiefenkarte als zusätzliche Metadaten zusammen mit den Bilddaten und den zugehörigen Metadaten aus dem Kamerasystem ausgegeben wird. Dass das Verfahren in dem Kamerasystem durchgeführt, beispielsweise von einer Recheneinheit des Kamerasystems ausgeführt, wird, ermöglicht es vorteilhafterweise, die ermittelte Tiefenkarte unmittelbar im Rahmen der Benutzung des Kamerasystems, insbesondere während einer laufenden Aufzeichnung, für eine Unterstützung des manuellen Fokussierens zu nutzen. Allerdings kann die erzeugte Tiefenkarte auch im Rahmen einer Nachbearbeitung der ausgezeichneten Bilddaten nützlich sein. Aus diesem Grund ist es vorteilhaft, sie zusammen mit den Bilddaten und den zugehörigen Metadaten als zusätzliche Metadaten, etwa als einen gemeinsamen Ausgabedatensatz, auszugeben.

Gemäß einer weiteren vorteilhaften Ausführungsform umfasst der Aufzeichnungsdatensatz (auf den das ML-Verfahren angewendet wird) als der Aufzeichnung der Bilddaten zugehörige Metadaten zumindest zwei der folgenden einstellbaren und/ oder messbaren Parameter des Kamerasystems: eine eingestellte Brennweite (Zoom) eines Objektivs (einer Kamera) des Kamerasystems, einen eingestellten Fokusabstand des Objektivs, einen eingestellten Blendenwert des Objektivs, dauerhafte optische Charakteristika des Objektivs, eine räumliche Lage des Kamerasystems, sowie Anzahl und/oder Anordnung der Pixel eines Bildsensors (einer Kamera) des Kamerasystems. Bei den dauerhaften optischen Charakteristika des Objektivs kann es sich insbesondere um Charakteristika handeln, die nicht für alle Exemplare eines bestimmten Objektivmodells gleich sind, sondern sich für verschiedene Exemplare individuell unterscheiden können und daher durch eine einmalige oder (bei veränderlichen Charakteristika) regelmäßig zu wiederholende Kalibrierung bestimmt werden müssen. Dauerhaft sind diese Charakteristika insbesondere insofern, als sie nicht gezielt verstellbar sind und/oder sich, wenn überhaupt, nur langsam (über Wochen, Monate oder Jahre) verändern. Beispiele für dauerhafte optische Charakteristika des Objekts sind etwa eine Verzerrung oder eine Verzeichnung des Objektivs.

Vorzugsweise umfasst der Aufzeichnungsdatensatz als der Aufzeichnung der Bilddaten zugehörige Metadaten zumindest die Brennweite, den Fokusabstand und den Blendenwert des Objektivs. Denn diese Parameter werden oft verstellt und wirken sich recht unmittelbar auf den Fokus im jeweiligen Bild aus.

Gemäß einer weiteren vorteilhaften Ausführungsform umfasst der Aufzeichnungsdatensatz, auf den das ML-Verfahren angewendet wird, ausschließlich Bilddaten eines oder mehrerer Bilder sowie die genannten der Aufzeichnung der Bilddaten des einen oder der mehreren Bilder zugehörigen Metadaten. Mit anderen Worten gehen in das ML-Verfahren keine sonstigen Daten als Eingangswerte ein, insbesondere keine Daten oder Metadaten, die sich nicht konkret auf die Aufzeichnung der vom Aufzeichnungsdatensatz umfassten Bilddaten beziehen. Dadurch kann vermieden werden, dass ein übermäßig komplexes ML-Verfahren verwendet werden muss.

Gemäß einer weiteren vorteilhaften Ausführungsform ist das ML-Verfahren derart ausgebildet, dass durch die Anwendung des ML-Verfahrens (d. h. das Auswerten der Aufzeichnungsdatensätze und somit das Erzeugen der Tiefenkarte durch das ML-Verfahren) Zusammenhänge zwischen einerseits der Perspektive des jeweiligen Bildes, dem von dem jeweiligen Bild abgedeckten Bereich der Szene, der Größe eines oder mehrerer Objekte im jeweiligen Bild und/oder lokalen Kontrast- oder Schärfewerten (insbesondere in Form einer ermittelten Ortsfrequenzverteilung) des jeweiligen Bildes und andererseits zumindest einem der einstellbaren und/oder messbaren Parameter des Kamerasystems in die Erzeugung der Tiefenkarte einfließen. Mit anderen Worten ist das ML-Verfahren dazu ausgebildet, die Information, die sich aufgrund dieser Zusammenhänge aus dem Aufzeichnungsdatensatz ableiten lässt, für das Erzeugen der Tiefenkarte zu nutzen.

Dass diese Zusammenhänge in die Erzeugung der Tiefenkarte einfließen, kann sich insbesondere daraus ergeben, dass das angewendete ML-Verfahren ein Modell umfasst, in dem diese Zusammenhänge (zum Beispiel als Funktionen) enthalten sind oder simuliert werden, und/oder dass das ML-Verfahren im Hinblick auf diese Zusammenhänge trainiert worden ist.

Konkrete Beispiele für Zusammenhänge, die vorteilhafterweise in die Erzeugung der Tiefenkarte einfließen können, stellen die folgenden drei Ausführungsformen dar.

Gemäß einer vorteilhaften Ausführungsform ist das ML-Verfahren dazu ausgebildet, dass durch die Anwendung des ML-Verfahrens Zusammenhänge zwischen einerseits lokalen Kontrast- oder Schärfewerten des jeweiligen Bildes und andererseits einem Fokusabstand eines Objektivs des Kamerasystems und/oder einem Blendenwert des Objektivs in die Erzeugung der Tiefenkarte einfließen.

Gemäß einer vorteilhaften Ausführungsform ist das ML-Verfahren dazu ausgebildet, dass durch die Anwendung des ML-Verfahrens Zusammenhänge zwischen einerseits der Größe eines oder mehrerer Objekte im jeweiligen Bild und andererseits einer Brennweite eines Objektivs des Kamerasystems in die Erzeugung der Tiefenkarte einfließen.

Gemäß einer vorteilhaften Ausführungsform ist das ML-Verfahren dazu ausgebildet, dass durch die Anwendung des ML-Verfahrens Zusammenhänge zwischen einerseits der Perspektive des jeweiligen Bildes und/oder dem von dem jeweiligen Bild abgedeckten Bereich der Szene und andererseits der Brennweite eines Objektivs des Kamerasystems und/oder der räumlichen Lage des Kamerasystems in die Erzeugung der Tiefenkarte einfließen.

Die genannten Zusammenhänge können insbesondere auch dadurch in die Erzeugung der Tiefenkarte einfließen, dass als Teil des angewendeten ML-Verfahrens die Perspektive des jeweiligen Bildes, der von dem jeweiligen Bild abgedeckten Bereich der Szene, die Größe eines oder mehrerer Objekte im jeweiligen Bild und/oder lokale Kontrast- oder Schärfewerte des jeweiligen Bildes ermittelt werden und zwar insbesondere im Verhältnis zu zumindest einem der einstellbaren und/oder messbaren Parameter des Kamerasystems. Eine vorteilhafte Möglichkeit hierzu besteht darin, das ML-Verfahren (zumindest unter anderem) als ein künstliches neuronales Netz auszuführen, wobei eine Schicht dieses künstlichen neuronalen Netzes einen entsprechenden Filterkernel aufweist.

Gemäß einer weiteren vorteilhaften Ausführungsform wird das ML-Verfahren als ein künstliches neuronales Netz ausgeführt, das eine Schicht mit einem Filterkernel umfasst, durch dessen Anwendung auf die Bilddaten sowie die zugehörigen Metadaten des genannten Aufzeichnungsdatensatz oder auf die Ergebnisse einer vorangehenden Schicht des künstlichen neuronalen Netzes lokale Kontrast- oder Schärfewerte des jeweiligen Bildes, insbesondere im Verhältnis zu einem Fokusabstand eines Objektivs des Kamerasystems und/oder einem Blendenwert des Objektivs, ermittelt werden.

Gemäß einer weiteren vorteilhaften Ausführungsform wird das ML-Verfahren als ein künstliches neuronales Netz ausgeführt, das eine Schicht mit einem Filterkernel umfasst, durch dessen Anwendung auf die Bilddaten sowie die zugehörigen Metadaten des genannten Aufzeichnungsdatensatz oder auf die Ergebnisse einer vorangehenden Schicht des künstlichen neuronalen Netzes die Größe eines oder mehrerer Objekte im jeweiligen Bild, insbesondere im Verhältnis zur Brennweite eines Objektivs des Kamerasystems, ermittelt werden.

Gemäß einer weiteren vorteilhaften Ausführungsform wird das ML-Verfahren als ein künstliches neuronales Netz ausgeführt, das eine Schicht mit einem Filterkernel umfasst, durch dessen Anwendung auf die Bilddaten sowie die zugehörigen Metadaten des genannten Aufzeichnungsdatensatz oder auf die Ergebnisse einer vorangehenden Schicht des künstlichen neuronalen Netzes die Perspektive des jeweiligen Bildes und/oder den von dem jeweiligen Bild abgedeckten Bereich der Szene, insbesondere im Verhältnis zur Brennweite eines Objektivs des Kamerasystems, ermittelt werden.

Wie bereits erwähnt kann der Aufzeichnungsdatensatz grundsätzlich die Bilddaten nur genau eines Bildes sowie als einer Aufzeichnung der Bilddaten zugehörige Metadaten die beim Aufzeichnen des einen Bildes effektiven Werte des einen oder der mehreren einstellbaren und/oder messbaren Parameter des Kamerasystems umfassen. Alternativ dazu kann gemäß einer weiteren vorteilhaften Ausführungsform vorgesehen sein, dass der Aufzeichnungsdatensatz die Bilddaten mehrerer Bilder einer Bildsequenz aus mittels des Kamerasystems in regelmäßiger zeitlicher Abfolge aufgezeichneten Bildern sowie als einer Aufzeichnung der Bilddaten zugehörige Metadaten jeweils die beim Aufzeichnen des jeweiligen Bildes der Bildsequenz effektiven Werte des einen oder der mehreren einstellbaren und/oder messbaren Parameter des Kamerasystems umfasst. Eine solche Ausführungsform ermöglicht es vorteilhafterweise, auch Zusammenhänge zwischen zu verschiedenen Zeitpunkten aufgezeichneten Bildern der Szene für das Ermitteln der Tiefenkarte zu berücksichtigen.

Gemäß einer vorteilhaften Weiterbildung dieser Ausführungsform wird das ML-Verfahren als ein künstliches neuronales Netz ausgeführt, das eine Schicht mit einem Filterkernel umfasst, durch dessen Anwendung auf die Bilddaten sowie die zugehörigen Metadaten des genannten Aufzeichnungsdatensatz oder auf die Ergebnisse einer vorangehenden Schicht des künstlichen neuronalen Netzes Unterschiede zwischen den Bildern der Bildsequenz hinsichtlich der Perspektive des jeweiligen Bildes, des von dem jeweiligen Bild abgedeckten Bereichs der Szene und/oder lokaler Kontrast- oder Schärfewerte des jeweiligen Bildes, insbesondere im Verhältnis zu Veränderungen zumindest eines der einstellbaren und/oder messbaren Parameter, ermittelt werden.

Gemäß einer weiteren vorteilhaften Weiterbildung umfasst das Verfahren vor dem Erzeugen der Tiefenkarte, also vor dem Auswerten des Aufzeichnungsdatensatzes durch das ML-Verfahren, ein Trainieren des ML-Verfahrens, wobei das Trainieren die folgenden Schritte umfasst: Bereitstellen eines oder mehrerer Trainingsdatensätze, denen jeweils eine wahre Tiefenkarte einer Trainingsszene zugeordnet ist und die jeweils entweder Bilddaten eines mittels eines Kamerasystems aufgezeichneten Bildes der Trainingsszene sowie als zugehörige Metadaten die beim Aufzeichnen des Bildes effektiven Werte des einen oder der mehreren einstellbaren und/oder messbaren Parameter des Kamerasystems umfassen oder Bilddaten eines virtuell erzeugten Bildes der Trainingsszene sowie als zugehörige Metadaten die beim virtuellen Erzeugen des Bildes effektiven Werte des einen oder der mehreren einstellbaren und/oder messbaren Parameter eines für das virtuelle Erzeugen simulierten Kamerasystems umfassen, wobei sich die Trainingsdatensätze untereinander jeweils in Bezug auf die Trainingsszene und/oder in Bezug auf zumindest einen der einstellbaren und/oder messbaren Parameter unterscheiden; Auswählen eines der Trainingsdatensätze; basierend zumindest auf den Bilddaten sowie den zugehörigen Metadaten des ausgewählten Trainingsdatensatzes Erzeugen einer geschätzten Tiefenkarte durch Anwenden des ML-Verfahrens auf den ausgewählten Trainingsdatensatz; Vergleichen der geschätzten Tiefenkarte mit der dem ausgewählten Trainingsdatensatz zugeordneten wahren Tiefenkarte; basierend auf dem Ergebnis des Vergleichs Anpassen des ML-Verfahrens; und Wiederholen der Schritte des Auswählens eines der Trainingsdatensätze, des Erzeugens der geschätzten Tiefenkarte, des Vergleichens der geschätzten Tiefenkarte mit der wahren Tiefenkarte und des Anpassens des ML-Verfahrens in mehreren Iterationen.

Die wahren Tiefenkarten, von denen jedem der Trainingsdatensätze jeweils eine zugeordnet ist, bilden dabei die sogenannte Ground Truth für das Training, anhand deren ermittelt werden kann, wie zuverlässig das ML-Verfahren aus einem Aufzeichnungs- bzw. Trainingsdatensatz eine Tiefenkarte (im Rahmen des Trainings als "geschätzte Tiefenkarte" bezeichnet) erzeugen kann. Abweichungen zwischen einer von dem ML-Verfahren erzeugten Tiefenkarte und der jeweiligen wahren Tiefenkarte sollen dabei möglichst minimiert werden. Dazu wird das ML-Modell in Abhängigkeit von diesen Abweichungen angepasst. Das genannte Anpassen kann insbesondere umfassen, dass Gewichte verändert werden, durch die das ML-Verfahren parametriert ist, beispielsweise Gewichte eines von dem ML-Verfahren umfassten Modells, wie etwa Gewichte in den Neuronen eines von dem ML-Verfahren umfassten künstlichen neuronalen Netzes.

Vorzugsweise werden in den verschiedenen Iterationen unterschiedliche Trainingsdatensätze ausgewählt. Allerdings kann vorgesehen sein, dass derselbe Trainingsdatensatz in mehreren verschiedenen Iterationen ausgewählt wird. Insbesondere ist es bevorzugt, dass in dem Training insgesamt alle Trainingsdatensätze zumindest einmal ausgewählt werden.

Des Weiteren ist es bevorzugt, dass in jeder Iteration (mit Ausnahme der ersten) jeweils das in der vorangehenden Iteration angepasste ML-Verfahren auf den ausgewählten Trainingsdatensatz angewendet wird. Das Training kann somit insbesondere nach dem Prinzip eines rekursiven Lernens ausgebildet sein.

Gemäß einer vorteilhaften Weiterbildung umfassen die Trainingsdatensätze jeweils zusätzlich zu den genannten Bilddaten und den genannten zugehörigen Metadaten eine Ortsfrequenzverteilung der Bilddaten, wobei die geschätzte Tiefenkarte zusätzlich basierend auf der Ortsfrequenzverteilung erzeugt wird. Die Ortsfrequenzverteilung kann insbesondere durch eine zweidimensionale Frequenzanalyse der genannten Bilddaten ermittelt werden. Derartige Trainingsdatensätze sind insbesondere zweckmäßig, wenn auch der Aufzeichnungsdatensatz, wie weiter oben erwähnt, (zusätzlich zu Bilddaten und zugehörigen Metadaten) eine ermittelte Ortsfrequenzverteilung der Bilddaten umfasst.

Gemäß einer vorteilhaften Weiterbildung umfassen die Trainingsdatensätze jeweils zusätzlich zu den genannten Bilddaten und den genannten zugehörigen Metadaten in der von den Bilddaten repräsentierten Bildinformation enthaltene Objektstrukturen der Bilddaten, wobei die geschätzte Tiefenkarte zusätzlich basierend auf den Objektstrukturen erzeugt wird. Die Objektstrukturen können insbesondere durch eine auf die genannten Bilddaten angewendete Strukturerkennung ermittelt werden. Derartige Trainingsdatensätze sind insbesondere zweckmäßig, wenn auch der Aufzeichnungsdatensatz, wie weiter oben erwähnt, (zusätzlich zu Bilddaten und zugehörigen Metadaten) ermittelte Objektstrukturen umfasst.

Das erfindungsgemäße Verfahren zum Unterstützen eines manuellen Fokussierens eines Kamerasystems umfasst: dass mittels eines Kamerasystems ein Bild einer Szene aufgezeichnet und ein Aufzeichnungsdatensatz erzeugt wird, der Bilddaten, die die Bildinformation des aufgezeichneten Bildes repräsentieren, sowie als einer Aufzeichnung der Bilddaten zugehörige Metadaten die beim Aufzeichnen des Bildes effektiven Werte eines oder mehrerer einstellbarer und/oder messbarer Parameter des Kamerasystems umfasst; dass gemäß einem erfindungsgemäßen Verfahren, insbesondere gemäß einer der vorstehend beschriebenen Ausführungsformen des erfindungsgemäßen Verfahrens, eine Tiefenkarte der Szene aus dem Aufzeichnungsdatensatz ermittelt wird; und dass auf Grundlage (in Abhängigkeit von) der Tiefenkarte eine Information über eine Fokussierung des Kamerasystems an einen Nutzer des Kamerasystems ausgegeben wird, und/oder dass auf Grundlage (in Abhängigkeit von) der Tiefenkarte eine Fokussierung des Kamerasystems automatisch angepasst wird.

Als Information über die Fokussierung des Kamerasystems kann insbesondere eine Information darüber ausgegeben werden, inwieweit die Szene fokussiert ist, d. h. scharf auf den Bildsensor abgebildet wird. Dabei kann vorgesehen sein, dass sich ein bestimmter Bereich oder ein bestimmtes Objekt der Szene von einem Nutzer des Kamerasystems als Fokussierungsziel auswählen lässt oder automatisch als Fokussierungsziel definiert wird. In diesem Fall kann als Information über die Fokussierung des Kamerasystems insbesondere eine Information darüber ausgegeben werden, inwieweit der bestimmte Bereich oder das bestimmte Objekt der Szene fokussiert ist.

Die Information kann insbesondere in Form einer visuellen oder haptischen Rückmeldung an den Nutzer des Kamerasystems ausgegeben werden. Beispielsweise kann sie auf einem Bildschirm des Kamerasystems, etwa einem Bildschirm einer Kamera des Kamerasystems oder einer vom Kamerasystems umfassten Handeinheit für ein Fokussieren der Kamera aus der Ferne, angezeigt werden, gegebenenfalls zusammen mit einem Live-Bild einer laufenden Aufzeichnung. In Form einer haptischen Rückmeldung kann die Information beispielsweise dadurch ausgegeben werden, dass ein Handrad zum Verstellen des Fokusabstands eines Objektivs einer Kamera des Kamerasystems vibriert, wenn anhand der Tiefenkarte festgestellt wird, dass der Fokusabstand dem Abstand eines bestimmten Bereichs oder bestimmten Objekts der Szene zum Objektiv entspricht, so dass der bestimmte Bereich bzw. das bestimmte Objekt von dem Objektiv scharf abgebildet wird.

Es kann auch vorgesehen sein, dass auf Grundlage der Tiefenkarte die Fokussierung des Kamerasystems automatisch angepasst wird, d. h. dass der eingestellte Fokusabstand eines Objektivs einer Kamera des Kamerasystems automatisch verstellt wird. Grundsätzlich kann auf Grundlage der Tiefenkarte ein allgemeiner Autofokus realisiert werden, bei dem der Fokusabstand direkt automatisch eingestellt wird. Zur Unterstützung eines manuellen Fokussierens ist dagegen vorstehen, dass zunächst von einem Nutzer des Kamerasystems manuell fokussiert wird, um den Fokus bereits möglichst präzise auf scharf abzubildende Bereiche oder Objekte der Szene einzustellen und dadurch zugleich vorzugeben, welche Bereiche oder Objekte der Szene scharf abgebildet werden sollen; und dass anschließend die so vorgegebene Fokussierung auf Grundlage der Tiefenkarte nur noch angepasst wird. Vorzugsweise umfasst das Anpassen folglich nur kleine Korrekturen, die beispielsweise auf Änderungen des Fokusabstands des Objektivs von höchstens 20 %, bevorzugt höchstens 10 %, insbesondere höchstens 5 %, des Bereichs beschränkt sind, über den der Fokusabstand des Objektivs insgesamt verstellt werden kann.

Das erfindungsgemäße Verfahren zum Unterstützen einer Nachbearbeitung von mittels eines Kamerasystems aufgezeichneten Bilddaten umfasst: dass mittels eines Kamerasystems ein Bild einer Szene aufgezeichnet und ein Aufzeichnungsdatensatz erzeugt wird, der Bilddaten, die die Bildinformation des aufgezeichneten Bildes repräsentieren, sowie als einer Aufzeichnung der Bilddaten zugehörige Metadaten die beim Aufzeichnen des Bildes effektiven Werte eines oder mehrerer einstellbarer und/oder messbarer Parameter des Kamerasystems umfasst; dass gemäß einem erfindungsgemäßen Verfahren, insbesondere gemäß einer der vorstehend beschriebenen Ausführungsformen des erfindungsgemäßen Verfahrens, eine Tiefenkarte der Szene aus dem Aufzeichnungsdatensatz ermittelt wird; und dass auf Grundlage (in Abhängigkeit von) der Tiefenkarte ein oder mehrere durch die Bilddaten repräsentierte Objekte der Szene gegenüber anderen Bildinhalten abgegrenzt werden. Die anderen Bildinhalte können dabei sonstige Objekte und/oder einen Hintergrund der Szene umfassen, insbesondere alles, was in der Szene enthalten ist und von einem Teil der Bilddaten repräsentiert wird, sich aber von dem genannten einen oder den genannten mehreren Objekten unterscheidet.

Das Abgrenzen kann insbesondere umfassen, dass ein dem jeweiligen repräsentierten Objekt entsprechender Teil der Bilddaten als diesem Objekt zugeordnet identifiziert wird. Diese Information kann grundsätzlich unmittelbar für eine Nachbearbeitung genutzt werden, etwa um diesen Teil der Bilddaten in dem jeweiligen Bild zu ersetzen oder um ihn aus dem jeweiligen Bild zu kopieren und in ein anderes Bild einzufügen. Die Information kann alternativ oder zusätzlich aber auch für eine spätere Nachbearbeitung der aufgezeichneten Bilder gespeichert werden, etwa als eine Annotation zu dem dem jeweiligen Objekt zugeordneten Teil der Bilddaten oder als eine Bildmaske. In diesem Fall kann dann vorgesehen sein, dass der Aufzeichnungsdatensatz diese Information (zusätzlich zu den Bilddaten und den zugehörigen Metadaten) umfasst.

Das genannte Abgrenzen kann grundsätzlich in der Kamera, beispielsweise zeitnah zur Aufzeichnung oder sogar in Echtzeit während der Aufzeichnung von Bildern, erfolgen. Insbesondere kann aber vorgesehen sein, dass die Tiefenkarte im Rahmen einer späteren Nachbearbeitung der aufgezeichneten Bilddaten als Grundlage dafür verwendet wird, ein oder mehrere durch die Bilddaten repräsentierte Objekte gegenüber anderen Bildinhalten abzugrenzen.

Das Abgrenzen kann insbesondere einem Freistellen eines dem jeweiligen Objekt entsprechenden Teils der Bilddaten entsprechen, das für ein flexibles Kombinieren verschiedener Bilddaten aus unterschiedlichen Quellen (seien es aufgezeichnete oder künstlich generierte Bilddaten) wesentlich ist. Aufgrund der Tiefenkarte kann das Freistellen vorteilhafterweise besonders präzise erfolgen, so dass durch die ermittelte Tiefenkarte das Nachbearbeiten der aufgezeichneten Bilder unterstützt wird.

Die beiden vorstehend beschriebenen Verfahren können auch kombiniert werden, so dass bei einem weiteren erfindungsgemäßen Verfahren auf Grundlage der ermittelten Tiefenkarte sowohl eine Information über eine Fokussierung des Kamerasystems, insbesondere in Form einer visuellen oder haptischen Rückmeldung, an einen Nutzer des Kamerasystems ausgegeben wird und/oder eine Fokussierung des Kamerasystems automatisch angepasst wird als auch ein oder mehrere durch die Bilddaten repräsentierte Objekte der Szene gegenüber anderen Bildinhalten abgegrenzt werden. Durch ein solches Verfahren können dann sowohl ein manuelles Fokussieren des Kamerasystems als auch eine Nachbearbeitung von mittels des Kamerasystems aufgezeichneten Bildern unterstützt werden.

Das erfindungsgemäße Computerprogrammprodukt umfasst Befehle, die bei der Ausführung durch einen Computer diesen veranlassen, ein erfindungsgemäßes Verfahren, insbesondere ein erfindungsgemäßes Verfahren gemäß einer der vorstehend beschriebenen Ausführungsformen, auszuführen. Die Vorteile des jeweiligen erfindungsgemäßen Verfahrens ergeben sich in entsprechender Weise auch für das Computerprogrammprodukt.

Das erfindungsgemäße Kamerasystem ist dazu ausgebildet, ein Bild einer Szene aufzuzeichnen und einen Aufzeichnungsdatensatz zu erzeugen, der die Bilddaten des aufgezeichneten Bildes sowie als einer Aufzeichnung der Bilddaten zugehörige Metadaten die beim Aufzeichnen des Bildes effektiven Werte eines oder mehrerer einstellbarer und/oder messbarer Parameter des Kamerasystems umfasst, wobei das Kamerasystem eine Recheneinheit aufweist, die zur Ausführung eines erfindungsgemäßen Verfahrens, insbesondere eines erfindungsgemäßen Verfahren nach einer der vorstehend beschriebenen Ausführungsformen, ausgebildet ist, um aus dem Aufzeichnungsdatensatz eine Tiefenkarte der Szene zu ermitteln sowie gegebenenfalls ein manuelles Fokussieren des Kamerasystems und/oder eine Nachbearbeitung aufgezeichneter Bilder zu unterstützen. Die Vorteile des jeweiligen erfindungsgemäßen Verfahrens ergeben sich in entsprechender Weise auch für das Kamerasystem.

Die Erfindung wird nachstehend lediglich beispielhaft anhand der Figuren weiter erläutert.
- Fig. 1: zeigt in vereinfachter schematischer Darstellung eine Ausführungsform eines erfindungsgemäßen Kamerasystems.
- Fig. 2: zeigt in vereinfachter schematischer Darstellung den Ablauf einer Ausführungsform des erfindungsgemäßen Verfahrens.
- Fig. 3: zeigt in vereinfachter schematischer Darstellung den Ablauf eines Trainierens des ML-Verfahren, das bei manchen Ausführungsformen des erfindungsgemäßen Verfahrens vorgesehen sein kann.

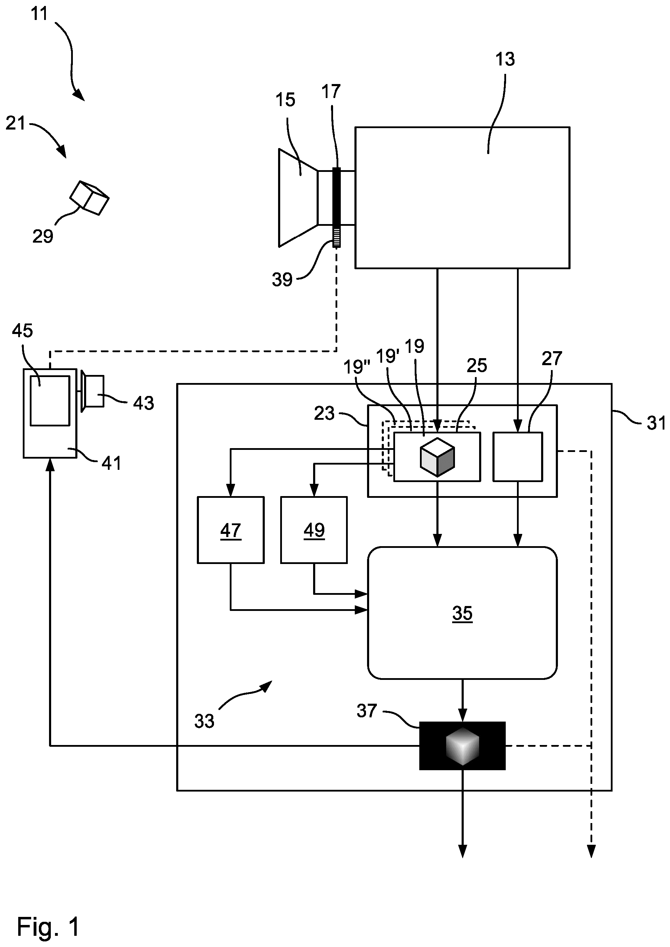

Das in Fig. 1 gezeigte Kamerasystem 11 umfasst eine Kamera 13 mit einem Objektiv 15, das einen Stellring 17 zum Verstellen eines eingestellten Fokusabstands des Objektivs 15 aufweist. Das Kamerasystem 11 ist dazu ausgebildet, ein Bild 19 einer Szene 21 aufzuzeichnen und einen Aufzeichnungsdatensatz 23 zu erzeugen, der die Bilddaten 25 des aufgezeichneten Bildes 19 sowie als einer Aufzeichnung der Bilddaten 25 zugehörige Metadaten 27 die beim Aufzeichnen des Bildes 19 effektiven Werte eines oder mehrerer einstellbarer und/oder messbarer Parameter des Kamerasystems 11 (darunter insbesondere den eingestellten Fokusabstand des Objektivs 15) umfasst. In Fig. 1 ist stellvertretend für die gesamte aufgezeichnete Szene 21 ein einzelnes würfelförmiges Objekt 29 dargestellt.

Der Aufzeichnungsdatensatz 23 umfasst vorzugsweise ausschließlich die Bilddaten 25 und die Metadaten 27. Die Metadaten 27 umfassen vorzugsweise zumindest die Brennweite, den Fokusabstand und den Blendenwert des Objektivs 15 und enthalten insbesondere keine Sensordaten einer Entfernungsmessung. Insbesondere umfasst das Kamerasystem 11 keinen Entfernungssensor. Der Aufzeichnungsdatensatz 23 kann die Bilddaten 25 genau eines Bildes 19 oder die Bilddaten 25 mehrerer Bilder 19, 19', 19" einer Bildsequenz aus mittels der Kamera 13 in regelmäßiger zeitlicher Abfolge aufgezeichneter Bilder 19, 19', 19" umfassen.

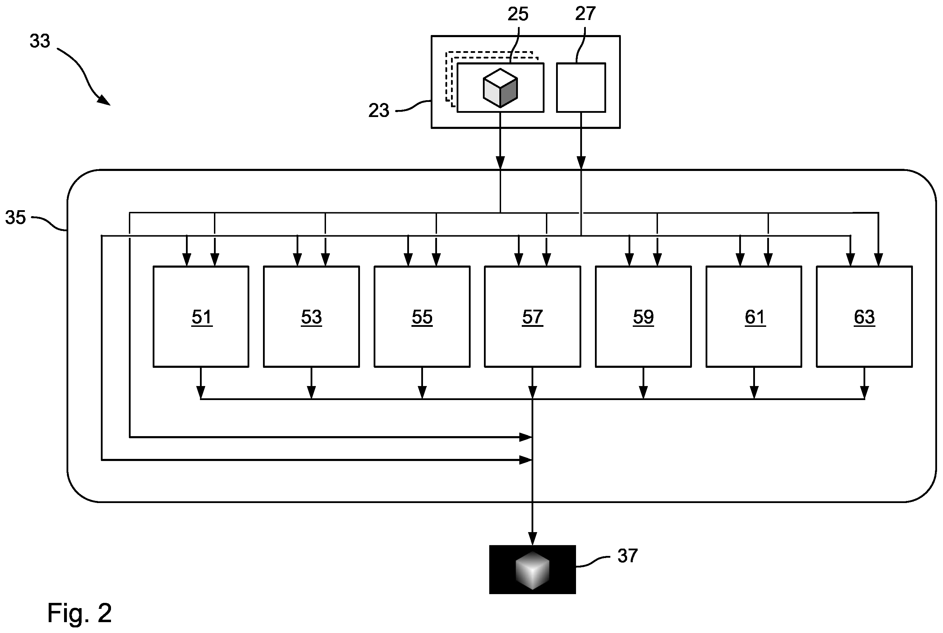

Das Kamerasystem umfasst ferner eine Recheneinheit 31, die zur Ausführung eines erfindungsgemäßen Verfahrens 33 (vgl. auch Fig. 2) ausgebildet ist. Die Recheneinheit 31 ist in Fig. 1 separat von der Kamera 13 dargestellt. Sie kann aber gleichwohl in die Kamera 13 integriert sein. Das von der Recheneinheit 31 ausgeführte Verfahren 33 umfasst, dass der Aufzeichnungsdatensatz 23 durch ein ML-Verfahren (Verfahren des maschinellen Lernens) 35 ausgewertet wird. In dieses ML-Verfahren 35 gehen die Bilddaten 25 und die Metadaten 27 des Aufzeichnungsdatensatzes 23 als Eingangswerte ein. Als Ausgangswert gibt das ML-Verfahren 35 eine von dem ML-Verfahren 35 basierend zumindest auf den Bilddaten 25 sowie den zugehörigen Metadaten 27 erzeugte Tiefenkarte 37 aus. Diese Tiefenkarte 37 umfasst Information darüber, welchen Abstand der durch einen jeweiligen Bildpunkt der Tiefenkarte 37 repräsentierte Teil der Szene 21 zur Kamera 13 bzw. zu ihrem Objektiv 15 aufweist. Idealerweise weist die Tiefenkarte 37 dabei eine dem jeweiligen Bild 19 entsprechende Auflösung auf. Die Auflösung der Tiefenkarte 37 kann aber auch geringer sein.

Die Recheneinheit 31 kann die gemäß dem Verfahren 33 ermittelte Tiefenkarte 37 einfach ausgeben. Insbesondere kann vorgesehen sein, dass die Tiefenkarte 37 zusammen mit den Bilddaten 25 und den zugehörigen Metadaten 27 ausgegeben wird (vgl. den mit unterbrochener Linie dargestellten Pfeil in Fig. 1), beispielsweise indem sie dem Aufzeichnungsdatensatz 23 hinzugefügt wird, so dass ein Ausgabedatensatz gebildet wird.

Das Verfahren 33 muss sich aber nicht unbedingt darauf beschränken, die Tiefenkarte 37 zu ermitteln, sondern kann auch dazu dienen, ein manuelles Fokussieren des Kamerasystems 11 zu unterstützen. Dazu kann das Verfahren 33 vor dem Ermitteln der Tiefenkarte 37 (also vor dem genannten Auswerten des Aufzeichnungsdatensatzes 23, als dessen Ergebnis die Tiefenkarte 37 erzeugt wird) bereits das Aufzeichnen der Szene 21 und das Erzeugen des Aufzeichnungsdatensatzes 23 umfassen und außerdem umfassen, dass nach dem Ermitteln der Tiefenkarte 37 auf Grundlage der Tiefenkarte 37 eine Information über eine Fokussierung des Kamerasystems 11 an einen Nutzer des Kamerasystems 11 ausgegeben wird und/oder auf Grundlage der Tiefenkarte 37 eine Fokussierung des Kamerasystems 11 automatisch angepasst wird. Die Fokussierung des Kamerasystems 11 kann dabei insbesondere (zumindest unter anderem) vom eingestellten Fokusabstand des Objektiv 15 abhängen bzw. durch diesen definiert sein.

Beispielsweise kann das Kamerasystem 11, wie in der in Fig. 1 gezeigten Ausführungsform, einen Antrieb 39 umfassen, der dazu ausgebildet ist, den Stellring 17 motorisch zu verstellen, und eine Handeinheit 41 mit einem Handrad 43 umfassen, die mit dem Antrieb 39 über eine drahtlose oder kabelgebundene Kommunikationsverbindung (vgl. unterbrochene Linie in Fig. 1) verbunden ist, so dass durch Betätigung des Handrads 43 der Handeinheit 41 über den Antrieb 39 der Stellring 17 des Objektivs 15 und somit der Fokusabstand des Objektivs 15 aus der Ferne verstellt werden können. Die Tiefenkarte 37 kann dabei an die Handeinheit 41 übertragen werden, die dazu ausgebildet sein kann, auf Grundlage der Tiefenkarte 37 eine Information über eine Fokussierung des Kamerasystems 11 an einen Nutzer des Kamerasystems 11 auszugeben. Diese Information kann insbesondere in Form einer visuellen Rückmeldung auf einem Bildschirm 45 der Handeinheit 41 ausgegeben werden oder in Form einer haptischen Rückmeldung, die beispielsweise ein Vibrieren des Handrads 43, eine Änderung einer Bewegungsdämpfung des Handrads 43 und/oder eine Änderung eines auf das Handrads 43 wirkenden Drehmoments umfassen kann. Alternativ oder zusätzlich zum Ausgeben einer solchen Information, kann die Handeinheit 41 auch dazu ausgebildet sein, auf Grundlage der Tiefenkarte eine Fokussierung des Kamerasystems 11 automatisch anzupassen, etwa indem auf Grundlage der Tiefenkarte eine Korrektur für den Fokusabstand ermittelt wird und die Handeinheit 41 den Antrieb 39 dazu ansteuert, die ermittelte Korrektur umzusetzen.

Für die genannten Möglichkeiten ist nicht unbedingt eine Handeinheit 41 erforderlich, sondern sie können auch durch die Kamera 13 selbst realisiert werden. Dazu kann die Tiefenkarte 37 an die Kamera 13 ausgegeben werden, wobei die Kamera 13 dazu ausgebildet sein kann, auf Grundlage der Tiefenkarte 37 eine Information über eine Fokussierung des Kamerasystems 11 an einen Nutzer des Kamerasystems 11 auszugeben und/oder eine Fokussierung des Kamerasystems 11 automatisch anzupassen. Dazu kann die Kamera 13 beispielsweise einen Bildschirm 45 aufweisen bzw. dazu ausgebildet sein, den Antrieb 39 anzusteuern.

Das Verfahren 33 kann umfassen, dass, bevor der Aufzeichnungsdatensatz 23 durch das ML-Verfahren 35 ausgewertet wird, eine zweidimensionale Frequenzanalyse 47 der Bilddaten 25 durchgeführt wird, um eine Ortsfrequenzverteilung der Bilddaten 25 zu ermitteln. Die ermittelte Ortsfrequenzverteilung kann dann als zusätzlicher Eingangswert in das ML-Verfahren 35 eingehen, so dass die Tiefenkarte 37 basierend nicht nur auf den Bilddaten 25 und den zugehörigen Metadaten 27, sondern auch auf der durch die Frequenzanalyse 47 ermittelten Ortsfrequenzverteilung ermittelt wird.

Alternativ oder zusätzlich kann das Verfahren 33 umfassen, dass, bevor der Aufzeichnungsdatensatz 23 durch das ML-Verfahren 35 ausgewertet wird, eine Strukturerkennung 49 auf die Bilddaten 25 angewendet wird, um in der von den Bilddaten 25 repräsentierten Bildinformation enthaltene Objektstrukturen zu ermitteln. Die ermittelten Objektstrukturen können dann als zusätzliche Eingangswerte in das ML-Verfahren 35 eingehen, so dass die Tiefenkarte 37 basierend nicht nur auf den Bilddaten 25 und den zugehörigen Metadaten 27 (sowie gegebenenfalls der genannten Ortsfrequenzverteilung), sondern auch auf den durch die Strukturerkennung 49 ermittelten Objektstrukturen ermittelt wird.

Mögliche Ausgestaltungen des im Rahmen des Verfahrens 33 angewendeten ML-Verfahrens 35 werden insbesondere durch die Fig. 2 illustriert. In das ML-Verfahren 35 gehen dabei (zumindest) die Bilddaten 25 und die zugehörigen Metadaten 27 eines jeweiligen Aufzeichnungsdatensatzes 23 als Eingangswerte ein, und basierend auf diesen erzeugt dann das ML-Verfahren 35 die Tiefenkarte 37. Dabei kann das ML-Verfahren 35 dazu ausgebildet sein, für das Erzeugen der Tiefenkarte 37 anhand der Bilddaten 25 und zugehörigen Metadaten 27 zunächst andere Größen sozusagen als Zwischenergebnisse zu bestimmen, auf denen dann das Erzeugen der Tiefenkarte 37 zusätzlich beruhen kann.

Insbesondere kann das ML-Verfahren 35 dazu ausgebildet sein: eine Korrelation 51 zwischen den Bilddaten 25 und den zugehörigen Metadaten 27 zu bestimmen; aus den Bilddaten 25 und den zugehörigen Metadaten 27 eine Entfernung 53 zu bestimmen; aus Unterschieden zwischen mehreren nacheinander aufgezeichneten Bildern 19, 19', 19" der Szene 21 eine Korrelation 55 zu bestimmen; Zusammenhänge 57 zwischen einerseits der Perspektive des jeweiligen Bildes 19, dem von dem jeweiligen Bild 19 abgedeckten Bereich der Szene 21, der Größe eines oder mehrerer Objekte im jeweiligen Bild 19 und/oder lokalen Kontrast- oder Schärfewerten des jeweiligen Bildes 19 und andererseits zumindest einem der einstellbaren und/oder messbaren Parameter des Kamerasystems 11 zu bestimmen; Zusammenhänge 59 zwischen einerseits lokalen Kontrast- oder Schärfewerten des jeweiligen Bildes 19 und andererseits einem Fokusabstand des Objektivs 15 des Kamerasystems 11 und/oder einem Blendenwert des Objektivs 15 zu bestimmen; Zusammenhänge 61 zwischen einerseits der Größe eines oder mehrerer Objekte im jeweiligen Bild 19 und andererseits einer Brennweite des Objektivs 15 des Kamerasystems 11 zu bestimmen; und/oder Zusammenhänge 63 zwischen einerseits der Perspektive des jeweiligen Bildes 19 und/oder dem von dem jeweiligen Bild 19 abgedeckten Bereich der Szene 21 und andererseits der Brennweite des Objektivs 15 des Kamerasystems 11 und/oder der räumlichen Lage des Kamerasystems 11 zu bestimmen.

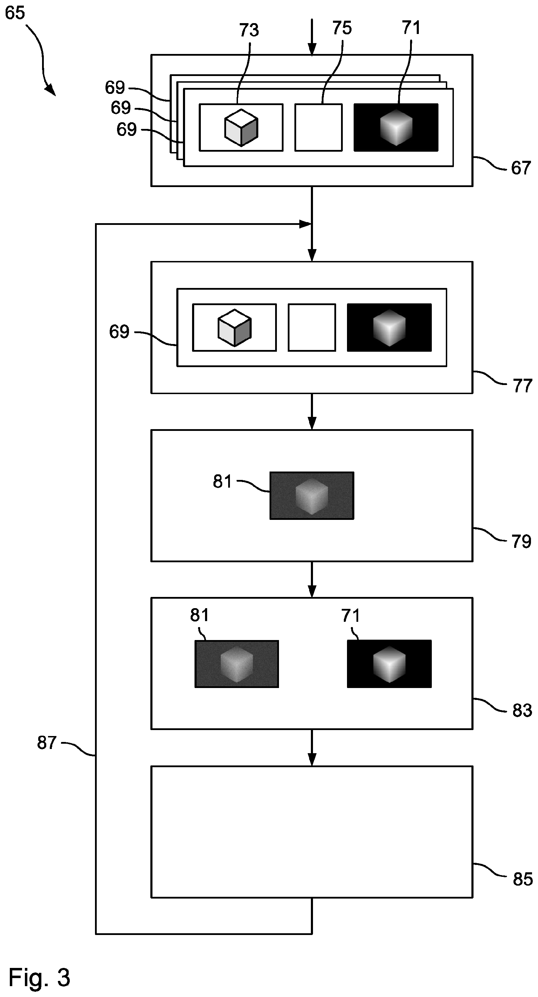

Für die Umsetzung des Verfahrens 33 kommen viele verschiedene und verschiedenartige ML-Verfahren 35 in Betracht. Das Verfahren 33 ist nicht an ein bestimmtes ML-Verfahren 35 oder an eine bestimmte Art von ML-Verfahren 35 gebunden. Für die Verwendung des ML-Verfahrens 35 im Rahmen des Verfahrens 33 ist es allerdings zweckmäßig, das ML-Verfahren 35 speziell zu trainieren. Ein Trainieren 65 des ML-Verfahrens 35 wird durch Fig. 3 illustriert.

In einem ersten Schritt erfolgt ein Bereitstellen 67 eines oder mehrerer Trainingsdatensätze 69, denen jeweils eine wahre Tiefenkarte 71 einer Trainingsszene (nicht unbedingt der Szene 21) zugeordnet ist und die jeweils entweder Bilddaten 73 eines mittels eines Kamerasystems (nicht unbedingt des Kamerasystems 11) aufgezeichneten Bildes der Trainingsszene sowie als zugehörige Metadaten 75 die beim Aufzeichnen des Bildes effektiven Werte des einen oder der mehreren einstellbaren und/oder messbaren Parameter des Kamerasystems umfassen oder Bilddaten 73 eines virtuell erzeugten Bildes der Trainingsszene sowie als zugehörige Metadaten 75 die beim virtuellen Erzeugen des Bildes effektiven Werte des einen oder der mehreren einstellbaren und/oder messbaren Parameter eines für das virtuelle Erzeugen simulierten Kamerasystems umfassen. Die Trainingsdatensätze 69 können (wie dargestellt) jeweils die dem jeweiligen Trainingsdatensatz 69 zugeordnete wahre Tiefenkarte 71 umfassen.

Daran schließt sich ein Auswählen 77 eines der Trainingsdatensätze 69 an. Darauf folgt basierend auf den Bilddaten 73 sowie den zugehörigen Metadaten 75 des ausgewählten Trainingsdatensatzes 69 ein Erzeugen 79 einer geschätzten Tiefenkarte 81. Im nächsten Schritt erfolgt ein Vergleichen 83 der geschätzten Tiefenkarte 81 mit der dem ausgewählten Trainingsdatensatz 69 zugeordneten wahren Tiefenkarte 71. Im Anschluss daran erfolgt schließlich ein Anpassen 85 des ML-Verfahrens 35, das insbesondere eine Anpassung von Gewichten des ML-Verfahrens 35 umfassen kann.

Die genannten Schritte des Auswählens 77 eines der Trainingsdatensätze 69, des Erzeugens 79 der geschätzten Tiefenkarte 81, des Vergleichens 83 der geschätzten Tiefenkarte 81 mit der wahren Tiefenkarte 71 und des Anpassens 85 des ML-Verfahrens 35 bilden eine Iteration des Trainierens 65. Dabei umfasst das Trainieren 65 ein, vorzugweise mehrfaches, Wiederholen 87 dieser Schritte 77, 79, 83, 85. Die Anzahl der Iterationen kann dabei vorgegeben sein. Es kann aber auch vorgesehen sein, dass jeweils nach dem Anpassen 85 des ML-Verfahrens 35 zunächst geprüft wird, ob ein definiertes Abbruchkriterium erfüllt ist, und das Wiederholen 87 nur ausgeführt wird, wenn das Abbruchkriterium noch nicht erfüllt ist.

### Bezugszeichen

- 11: Kamerasystem
- 13: Kamera
- 15: Objektiv
- 17: Stellring
- 19: Bild
- 21: Szene
- 23: Aufzeichnungsdatensatz
- 25: Bilddaten
- 27: Metadaten
- 29: Objekt
- 31: Recheneinheit
- 33: Verfahren
- 35: ML-Verfahren
- 37: Tiefenkarte
- 39: Antrieb
- 41: Handeinheit
- 43: Handrad
- 45: Bildschirm
- 47: Frequenzanalyse
- 49: Strukturerkennung
- 51: Bestimmen einer Korrelation
- 53: Bestimmen einer Entfernung
- 55: Bestimmen einer Korrelation
- 57: Bestimmen von Zusammenhängen
- 59: Bestimmen von Zusammenhängen
- 61: Bestimmen von Zusammenhängen
- 63: Bestimmen von Zusammenhängen
- 65: Trainieren
- 67: Bereitstellen
- 69: Trainingsdatensatz
- 71: wahre Tiefenkarte
- 73: Bilddaten
- 75: Metadaten
- 77: Auswählen
- 79: Erzeugen
- 81: geschätzte Tiefenkarte
- 83: Vergleichen
- 85: Anpassen
- 87: Wiederholen

## Patentansprüche

1. Verfahren (33) zum Ermitteln einer Tiefenkarte (37) einer Szene (21), bei dem die Tiefenkarte (37) der Szene (21) aus einem Aufzeichnungsdatensatz (23) ermittelt wird, der, vorzugsweise ausschließlich, Bilddaten (25) und einer Aufzeichnung der Bilddaten (25) zugehörige Metadaten (27) umfasst, wobei die Bilddaten (25) die Bildinformation wenigstens eines mittels eines Kamerasystems (11) aufgezeichneten Bildes (19) der Szene (21) repräsentieren und die Metadaten (27), die vorzugsweise keine Sensordaten einer Entfernungsmessung enthalten, effektive Werte eines oder mehrerer einstellbarer und/oder messbarer Parameter des Kamerasystems (11) beim Aufzeichnen des wenigstens einen Bildes (19) umfassen,
wobei das Verfahren (33) umfasst, dass der Aufzeichnungsdatensatz (23) durch ein ML-Verfahren (Verfahren des maschinellen Lernens) (35) ausgewertet wird, das basierend zumindest auf den Bilddaten (25) sowie den zugehörigen Metadaten (27) eine Tiefenkarte (37) der Szene (21) erzeugt.

2. Verfahren nach Anspruch 1,
wobei das ML-Verfahren (35) eine Korrelation (51) zwischen den Bilddaten (25) und den zugehörigen Metadaten (27) bestimmt und die Tiefenkarte (37) basierend auf dieser Korrelation (51) erzeugt,
und/oder
wobei das ML-Verfahren (35) aus den Bilddaten (25) und den zugehörigen Metadaten (27) eine Entfernung (53) bestimmt, in der sich beim Aufzeichnen des wenigstens einen Bildes (19) ein durch die Bilddaten repräsentiertes Objekt zu dem Kamerasystem (11) befunden hat, und die Tiefenkarte (37) basierend auf dieser Entfernung (53) erzeugt.

3. Verfahren nach Anspruch 1 oder 2,
wobei das ML-Verfahren (35) die Tiefenkarte (37) basierend auf einer Ortsfrequenzverteilung der Bilddaten (25) erzeugt,
und/oder
wobei, vor dem Auswerten des Aufzeichnungsdatensatzes (23) durch das ML-Verfahren (35), eine zweidimensionale Frequenzanalyse (47) der Bilddaten (25) durchgeführt wird, um eine Ortsfrequenzverteilung der Bilddaten (25) zu ermitteln, wobei das Erzeugen der Tiefenkarte (37) der Szene (21) durch das ML-Verfahren (35) zusätzlich auf der ermittelten Ortsfrequenzverteilung basiert.

4. Verfahren nach einem der vorstehenden Ansprüche,
wobei, vor dem Auswerten des Aufzeichnungsdatensatzes (23) durch das ML-Verfahren (35), eine Strukturerkennung (49) auf die Bilddaten (25) angewendet wird, um in der von den Bilddaten (25) repräsentierten Bildinformation enthaltene Objektstrukturen zu ermitteln, die räumlich mit den Bilddaten (25) korreliert sind, wobei das Erzeugen der Tiefenkarte (37) der Szene (21) durch das ML-Verfahren (35) zusätzlich auf den ermittelten Objektstrukturen basiert.

5. Verfahren nach einem der vorstehenden Ansprüche,
wobei die Bilddaten (25) die Bildinformation mehrerer mittels des Kamerasystems (11) nacheinander aufgezeichneter Bilder (19, 19', 19") einer Bewegtbildszene repräsentieren, und
wobei das ML-Verfahren (35) aus Unterschieden zwischen den mehreren nacheinander aufgezeichneten Bildern (19, 19', 19") der Bewegtbildszene eine Korrelation (55) bestimmt und die Tiefenkarte (37) basierend auf dieser Korrelation (55) erzeugt.

6. Verfahren nach einem der vorstehenden Ansprüche
wobei die Tiefenkarte (37) gemäß einem zweidimensionalen Raster erzeugt wird, das eine geringere räumliche Auflösung aufweist als die Bilddaten (25) des wenigstens einen Bildes (19).

7. Verfahren nach einem der vorstehenden Ansprüche,
wobei das Verfahren (33) in dem Kamerasystem (11) durchgeführt wird und die erzeugte Tiefenkarte (37) als zusätzliche Metadaten zusammen mit den Bilddaten (25) und den zugehörigen Metadaten (27) aus dem Kamerasystem (11) ausgegeben wird.

8. Verfahren nach einem der vorstehenden Ansprüche,
wobei der Aufzeichnungsdatensatz (23) als der Aufzeichnung der Bilddaten (25) zugehörige Metadaten (27) zumindest zwei der folgenden einstellbaren und/oder messbaren Parameter des Kamerasystems (11) umfasst:
eine eingestellte Brennweite eines Objektivs (15) des Kamerasystems (11),
einen eingestellten Fokusabstand des Objektivs (15),
einen eingestellten Blendenwert des Objektivs (15),
dauerhafte optische Charakteristika des Objektivs (15),
eine räumliche Lage des Kamerasystems (11), sowie
Anzahl und/oder Anordnung der Pixel eines Bildsensors des Kamerasystems (11);
vorzugsweise zumindest die Brennweite, den Fokusabstand und den Blendenwert des Objektivs (15).

9. Verfahren nach einem der vorstehenden Ansprüche,
wobei das ML-Verfahren (35) derart ausgebildet ist, dass durch die Anwendung des ML-Verfahrens (35) Zusammenhänge (57) zwischen einerseits der Perspektive des jeweiligen Bildes (19), dem von dem jeweiligen Bild (19) abgedeckten Bereich der Szene (21), der Größe eines oder mehrerer Objekte (29) im jeweiligen Bild (19) und/oder lokalen Kontrast- oder Schärfewerten des jeweiligen Bildes (19) und andererseits zumindest einem der einstellbaren und/oder messbaren Parameter des Kamerasystems (11) in die Erzeugung der Tiefenkarte (37) einfließen,
wobei vorzugsweise ferner vorgesehen ist:
- dass das ML-Verfahren (35) derart ausgebildet ist, dass durch die Anwendung des ML-Verfahrens (35) Zusammenhänge (59) zwischen einerseits lokalen Kontrast- oder Schärfewerten des jeweiligen Bildes (19) und andererseits einem Fokusabstand eines Objektivs (15) des Kamerasystems (11) und/oder einem Blendenwert des Objektivs (15) in die Erzeugung der Tiefenkarte (37) einfließen,
und/oder
- dass das ML-Verfahren (35) derart ausgebildet ist, dass durch die Anwendung des ML-Verfahrens (35) Zusammenhänge (61) zwischen einerseits der Größe eines oder mehrerer Objekte (29) im jeweiligen Bild (19) und andererseits einer Brennweite eines Objektivs (15) des Kamerasystems (11) in die Erzeugung der Tiefenkarte (37) einfließen,
und/oder
- dass das ML-Verfahren (35) derart ausgebildet ist, dass durch die Anwendung des ML-Verfahrens (35) Zusammenhänge (63) zwischen einerseits der Perspektive des jeweiligen Bildes (19) und/oder dem von dem jeweiligen Bild (19) abgedeckten Bereich der Szene (21) und andererseits der Brennweite eines Objektivs (15) des Kamerasystems (11) und/oder der räumlichen Lage des Kamerasystems (11) in die Erzeugung der Tiefenkarte (37) einfließen.

10. Verfahren nach einem der vorstehenden Ansprüche,
wobei das ML-Verfahren (35) als ein künstliches neuronales Netz ausgeführt wird, das eine Schicht mit einem Filterkernel umfasst, durch dessen Anwendung auf die Bilddaten (25) sowie die zugehörigen Metadaten (27) des genannten Aufzeichnungsdatensatz (23) oder auf die Ergebnisse einer vorangehenden Schicht des künstlichen neuronalen Netzes
- lokale Kontrast- oder Schärfewerte des jeweiligen Bildes (19), insbesondere im Verhältnis zu einem Fokusabstand eines Objektivs (15) des Kamerasystems (11) und/oder einem Blendenwert des Objektivs (15), ermittelt werden,
und/oder
- die Größe eines oder mehrerer Objekte (29) im jeweiligen Bild (19), insbesondere im Verhältnis zur Brennweite eines Objektivs (15) des Kamerasystems (11), ermittelt wird,
und/oder
- die Perspektive des jeweiligen Bildes (19) ermittelt wird,
und/oder
- der von dem jeweiligen Bild (19) abgedeckte Bereich der Szene (21), insbesondere im Verhältnis zur Brennweite eines Objektivs (15) des Kamerasystems (11), ermittelt wird.

11. Verfahren nach einem der vorstehenden Ansprüche,
wobei der Aufzeichnungsdatensatz (23) die Bilddaten (25) mehrerer Bilder (19, 19', 19") einer Bildsequenz aus mittels des Kamerasystems (11) in regelmäßiger zeitlicher Abfolge aufgezeichneten Bildern (19, 19', 19") sowie als einer Aufzeichnung der Bilddaten (25) zugehörige Metadaten (27) jeweils die beim Aufzeichnen des jeweiligen Bildes (19, 19', 19") der Bildsequenz effektiven Werte des einen oder der mehreren einstellbaren und/oder messbaren Parameter des Kamerasystems (11) umfasst,
wobei vorzugsweise ferner vorgesehen ist,
dass das ML-Verfahren (35) als ein künstliches neuronales Netz ausgeführt wird, das eine Schicht mit einem Filterkernel umfasst, durch dessen Anwendung auf die Bilddaten (25) sowie die zugehörigen Metadaten (27) des genannten Aufzeichnungsdatensatz (23) oder auf die Ergebnisse einer vorangehenden Schicht des künstlichen neuronalen Netzes Unterschiede zwischen den Bildern (19, 19', 19") der Bildsequenz hinsichtlich der Perspektive des jeweiligen Bildes (19, 19', 19"), des von dem jeweiligen Bild (19, 19', 19") abgedeckten Bereichs der Szene (21) und/oder lokaler Kontrast- oder Schärfewerte des jeweiligen Bildes (19, 19', 19"), insbesondere im Verhältnis zu Veränderungen zumindest eines der einstellbaren und/oder messbaren Parameter, ermittelt werden.

12. Verfahren nach einem der vorstehenden Ansprüche,
das vor dem Erzeugen der Tiefenkarte (37) ein Trainieren (65) des ML-Verfahrens (35) mit den folgenden Schritten umfasst:
- Bereitstellen (67) eines oder mehrerer Trainingsdatensätze (69), denen jeweils eine wahre Tiefenkarte (71) einer Trainingsszene zugeordnet ist und die jeweils
entweder Bilddaten (73) eines mittels eines Kamerasystems aufgezeichneten Bildes der Trainingsszene sowie als zugehörige Metadaten (75) die beim Aufzeichnen des Bildes effektiven Werte des einen oder der mehreren einstellbaren und/oder messbaren Parameter des Kamerasystems umfassen
oder Bilddaten (73) eines virtuell erzeugten Bildes der Trainingsszene sowie als zugehörige Metadaten (75) die beim virtuellen Erzeugen des Bildes effektiven Werte des einen oder der mehreren einstellbaren und/oder messbaren Parameter eines für das virtuelle Erzeugen simulierten Kamerasystems umfassen;
wobei sich die Trainingsdatensätze (69) untereinander jeweils in Bezug auf die Trainingsszene und/oder in Bezug auf zumindest einen der einstellbaren und/oder messbaren Parameter unterscheiden;
- Auswählen (77) eines der Trainingsdatensätze (69);
- basierend zumindest auf den Bilddaten (73) sowie den zugehörigen Metadaten (75) des ausgewählten Trainingsdatensatzes (69) Erzeugen (79) einer geschätzten Tiefenkarte (81) durch Anwenden des ML-Verfahrens (35) auf den ausgewählten Trainingsdatensatz (69);
- Vergleichen (83) der geschätzten Tiefenkarte (81) mit der dem ausgewählten Trainingsdatensatz (69) zugeordneten wahren Tiefenkarte (71);
- basierend auf dem Ergebnis des Vergleichs Anpassen (85) des ML-Verfahrens (53); und
- Wiederholen (87) der Schritte des Auswählens (77) eines der Trainingsdatensätze (69), des Erzeugens (79) der geschätzten Tiefenkarte (81), des Vergleichens (83) der geschätzten Tiefenkarte (81) mit der wahren Tiefenkarte (71) und des Anpassens (85) des ML-Verfahrens (35) in mehreren Iterationen,
wobei vorzugsweise ferner vorgesehen ist:
- dass die Trainingsdatensätze (69) jeweils zusätzlich zu den genannten Bilddaten (73) und den genannten zugehörigen Metadaten (75) eine Ortsfrequenzverteilung der Bilddaten (73) umfassen und die geschätzte Tiefenkarte (81) zusätzlich basierend auf der Ortsfrequenzverteilung erzeugt wird,
und/oder
- dass die Trainingsdatensätze (69) jeweils zusätzlich zu den genannten Bilddaten (73) und den genannten zugehörigen Metadaten (75) in der von den Bilddaten (73) repräsentierten Bildinformation enthaltene Objektstrukturen der Bilddaten (73) umfassen, und
wobei die geschätzte Tiefenkarte (81) zusätzlich basierend auf den Objektstrukturen erzeugt wird.

13. Verfahren zum Unterstützen eines manuellen Fokussierens eines Kamerasystems (11) und/oder zum Unterstützen einer Nachbearbeitung von mittels eines Kamerasystems (11) aufgezeichneten Bildern (19),
wobei das Verfahren (33) umfasst:
- dass mittels eines Kamerasystems (11) ein Bild (19) einer Szene (21) aufgezeichnet und ein Aufzeichnungsdatensatz (23) erzeugt wird, der Bilddaten (25), die die Bildinformation des aufgezeichneten Bildes (19) repräsentieren, sowie als einer Aufzeichnung der Bilddaten (25) zugehörige Metadaten (27) die beim Aufzeichnen des Bildes (19) effektiven Werte eines oder mehrerer einstellbarer und/oder messbarer Parameter des Kamerasystems (11) umfasst;
- dass gemäß einem Verfahren nach einem der vorstehenden Ansprüche eine Tiefenkarte (37) der Szene (21) aus dem Aufzeichnungsdatensatz (23) ermittelt wird; und
- dass auf Grundlage der Tiefenkarte (37) eine Information über eine Fokussierung des Kamerasystems (11), insbesondere in Form einer visuellen oder haptischen Rückmeldung, an einen Nutzer des Kamerasystems (11) ausgegeben wird,
und/oder
dass auf Grundlage der Tiefenkarte (37) eine Fokussierung des Kamerasystems (11) automatisch angepasst wird,
und/oder
dass auf Grundlage der Tiefenkarte (37) ein oder mehrere durch die Bilddaten (25) repräsentierte Objekte (29) der Szene (21) gegenüber anderen Bildinhalten abgegrenzt werden.

14. Computerprogrammprodukt, das Befehle umfasst, die bei der Ausführung durch einen Computer diesen veranlassen, ein Verfahren (33) nach einem der vorstehenden Ansprüche auszuführen.

15. Kamerasystem (11), das dazu ausgebildet ist, ein Bild (19) einer Szene (21) aufzuzeichnen und einen Aufzeichnungsdatensatz (23) zu erzeugen, der die Bilddaten (25) des aufgezeichneten Bildes (19) sowie als einer Aufzeichnung der Bilddaten (25) zugehörige Metadaten (27) die beim Aufzeichnen des Bildes (19) effektiven Werte eines oder mehrerer einstellbarer und/oder messbarer Parameter des Kamerasystems (11) umfasst, wobei das Kamerasystem (11) eine Recheneinheit (31) aufweist, die zur Ausführung eines Verfahrens (33) nach einem der Ansprüche 1 bis 13 ausgebildet ist, um aus dem Aufzeichnungsdatensatz (23) eine Tiefenkarte (37) der Szene zu ermitteln, ein manuelles Fokussieren des Kamerasystems (11) zu unterstützen und/oder eine Nachbearbeitung des aufgezeichneten Bildes (19) zu unterstützen.
